# EUROPÄISCHE PATENTSCHRIFT

(11) **EP 1 044 081 B1**
(45) Veröffentlichungstag und Bekanntmachung des Hinweises auf die Patenterteilung: **18.09.2002**
(21) Anmeldenummer: 99904697.2
(22) Anmeldetag: 07.01.1999
(51) Int. Cl.: B23C 5/24

(54) **MESSERKOPF MIT EIN- BIS DREIDIMENSIONAL VERSTELLBAREM SCHNEIDEINSATZ UND MIT FORMSCHLÜSSIG AUFGENOMMENEM SCHNEIDEINSATZ**
MILLING HEAD WITH ONE TO THREE-DIMENSIONAL ADJUSTABLE CUTTING INSERT AND WITH A POSITIVE FITTING CUTTING INSERT
TETE DE FRAISAGE DOTEE D'UNE PLAQUETTE A REGLAGE UNIDIMENSIONNEL A TRIDIMENSIONNEL ET D'UNE PLAQUETTE FIXEE PAR LIAISON DE FORME

(30) Priorität: 08.01.1998 DE 19800440
(43) Veröffentlichungstag der Anmeldung: 18.10.2000
(73) Patentinhaber: Hartmetallwerkzeugfabrik Andreas Maier GmbH, 88477 Schwendi-Hörenhausen (DE)
(72) Erfinder: MAIER, Andreas, D-88477 Schwendi-Hörenhausen (DE); EBLE, Wilfried, D-77948 Friesenheim (DE)
(74) Vertreter: König, Beate, Dipl.-Phys. Dr.
(86) Internationale Anmeldenummer: DE9900015
(87) Internationale Veröffentlichungsnummer: WO99034948

(56) Entgegenhaltungen:
- EP-A- 0 744 242
- DE-A- 2 140 004
- DE-A- 2 309 430
- DE-A- 3 007 322
- DE-A- 3 140 905
- DE-C- 3 236 921
- GB-A- 2 103 975
- US-A- 2 846 757
- US-A- 4 627 771
- US-A- 4 692 069
- US-A- 4 929 131
- US-A- 4 964 763
- US-A- 5 201 613

## Beschreibung

Die Erfindung betrifft einen Messerkopf mit einem Grundkörper und mindestens einem Schneideinsatz, der im Grundkörper mittels eines Klemmelements klemmbefestigt und in seiner Lage verstellbar ist, wobei sich der Schneideinsatz in einer Ausnehmung des Grundkörpers erstreckt und zur Verstellung des Schneideinsatzes in Eingriff befindliche Verstellmittel vorgesehen sind und wobei der Schneideinsatz für eine Verstellung eine Drehpunktlagerung aufweist, wobei beidseits des Drehpunkts im Schneideinsatz zwei Einstellschrauben zur Festlegung der Verschwenkung des Schneideinsatzes vorgesehen sind. Ferner betrifft die Erfindung einen Messerkopf mit einem Grundkörper und Schneideinsätzen, die im Grundkörper jeweils in Ausnehmungen verstellbar sind, wobei ein in einer Ausnehmung angeordnetes Klemmelement zur klemmbefestigung vorgesehen ist, wobei der Schneideinsatz formschlüssig in einer Aufnahme sitzt und mittels des Klemmelements in seiner Lage fixiert ist.

Derartige Messerköpfe werden insbesondere zum Fräsen mit hohen Drehzahlen eingesetzt und erfahren entsprechend hohe Beanspruchungen. Wichtig ist insbesondere, daß die Schneideinsätze ihre Lage beibehalten, um einerseits die Bearbeitungsgenauigkeit aufrechtzuerhalten und andererseits jegliche Unfallgefahr zu vermeiden.

Bei einem aus der DE 40 03 862 C2 bekannten Messerkopf sind die Schneideinsätze in Ausnehmungen des Grundkörpers angeordnet und in axialer und radialer Richtung verstellbar. Mit Hilfe von Rundkeilen sind die Schneideinsätze verspannbar. Der Grundkörper weist eine nicht dargestellte Kühlung auf. Die Achse der Rundkeile ist dabei jeweils windschief zur Achse der Schneideinsätze angeordnet, wobei die Rundkeile selbst wiederum in Ausnehmungen des Grundkörpers angeordnet sind. Die Anordnung ist dabei dergestalt, daß die Ausnehmungen von Schneideinsatz und Grundkörper miteinander verbunden sind und die Schneideinsätze durch die Rundkeile gegen einen Wandbereich des Grundkörpers verspannt und auf diese Weise in der Ausnehmung gehaltert werden. Zur Erzielung eines guten Klemmkontakts ist der Rundkeil jeweils mit einer ebenen Klemmfläche versehen.

Bei einem anderen Messerkopf gemäß der DE 35 30 745 A1 weist der Grundkörper mehrere, im wesentlichen in radialer Richtung angeordnete, in einen Außenumfangsbereich sowie in einen Stirnflächenbereich mündende Nuten auf, in denen jeweils ein Schneideinsatz angeordnet ist, der mittels Verstelleinrichtungen in axialer und radialer Richtung verstellbar ist. Da die Nuten sowohl in den Stirnflächenbereich als auch in den Außenumfangsbereich des Grundkörpers münden, ist es möglich, Schneideinsätze mit unterschiedlichen Abmessungen zu verwenden. Zur Fixierung des Schneideinsatzes am Grundkörper ist eine Spanneinrichtung in Form einer Spannschraube vorgesehen.

Diesen und weiteren Messerköpfen gemeinsam ist, daß die Schneideinsätze radial und axial verstellbar sind. Dies ist für viele Anwendungsfälle ausreichend. Indessen kommt es häufig vor, daß eine weitergehende Justierbarkeit, d.h. eine dreidimensionale Verstellbarkeit des oder der Schneideinsätze erwünscht ist.

Weiter ist diesen und weiteren Messerköpfen gemeinsam das Vorhandensein einer offenen Ausnehmung, in der sich die Schneideinsätze befinden und mittels Klemmelementen klemmbefestigt sind. Es ergibt sich durch diese Umfangsaussparung bzw. -ausfräsung ein kleinerer Kerndurchmesser des Grundkörpers als stabilitätsbestimmende Größe. Außerdem besteht wie erwähnt eine nicht auszuschließende Restwahrscheinlichkeit, daß sich die in der offenen Aussparung befindlichen Schneideinsätze und Klemmelemente bei den eingesetzten hohen Drehzahlen doch lösen und zu Unfällen führen können.

In der Patentanspruch 1 beschreibenden US 2 846 757 A ist ein Messerkopf mit einem Grundkörper und mindestens einem Schneideinsatz beschrieben, der im Grundkörper mittels eines Klemmelements klemmbefestigt und in seiner Lage verstellbar ist. Der Schneideinsatz erstreckt sich in einer Ausnehmung des Grundkörpers und es sind zur Verstellung des Schneideinsatzes in Eingriff befindliche Verstellmittel vorgesehen, wobei der Schneideinsatz für eine Verstellung eine Drehpunktlagerung aufweist und beidseits des Drehpunkts im Schneideinsatz zwei Einstellschrauben zur Festlegung der Verschwenkung des Schneideinsatzes vorgesehen sind. Diese Drehpunktlagerung ist indessen im Grundkörper verankert und somit fest. Sie ermöglicht eine Kippbewegung, nicht jedoch eine Längsverstellung des Schneideinsatzes.

Aus der DE 44 30 197 A ist weiter ein Werkzeug zur Feinbearbeitung der Innenflächen von Bohrungen bekannt. Im Grundkörper dieses Feinbearbeitungswerkzeugs ist ein Schlitz vorgesehen, dessen Breite mittels einer Einstellvorrichtung zur Durchmesserverstellung der Schneide variierbar ist.

Bei einem Messerkopf gemäß der den nächstkommenden Stand der Technik für den Gegenstand von Patentanspruch 17 beschreibenden US 4 964 763 A mit einem Grundkörper und einem Schneideinsatz, der im Grundkörper in einer Ausnehmung verstellbar und mittels eines in einer Ausnehmung angeordneten Klemmelements klemmbefestigt ist, sitzt der Schneideinsatz formschlüssig in einer Aufnahme und ist mittels des Klemmelements in seiner Lage fixiert. Als Klemmelement sind ein Keilstift und ein Gewindestift vorgesehen. Es kann zu einer Beeinträchtigung der Betriebssicherheit wegen eventueller Torsionsbeanspruchungen und Schwingungsneigung der Schneidplatte kommen.

In der DE 296 06 165 U ist ein Fasenfräser beschrieben, dessen Schneidwerkzeuge verschwenkbar sind, indem diese auf einem um eine Achse drehbaren Haltekörper zentrisch gelagert sind.

Der Erfindung liegt die Aufgabe zugrunde, einen Messerkopf zu schaffen, der einen Einsatz bei hohen Drehzahlen und eine höchstgenaue Verstellbarkeit der Schneideinsätze ermöglicht.

Diese Aufgabe ist erfindungsgemäß bei einem Messerkopf mit den Merkmalen des Anspruchs 1 gelöst. Vorteilhafte Weiterbildungen des erfindungsgemäßen Messerkopfes sind Gegenstand der Unteransprüche.

Ein erfindungsgemäßer Messerkopf umfaßt somit einen Grundkörper und mindestens einen Schneideinsatz, der im Grundkörper mittels eines Klemmelements klemmbefestigt und in seiner Lage verstellbar ist. Der Schneideinsatz erstreckt sich in einer Ausnehmung des Grundkörpers. Zur Verstellung des Schneideinsatzes sind mit diesem in Eingriff befindliche Verstellmittel vorgesehen. Der Schneideinsatz ist für eine Verstellung drehpunktgelagert, wobei beidseits des Drehpunkts im Schneideinsatz zwei Einstellschrauben zur Festlegung der Verschwenkung des Schneideinsatzes vorgesehen sind. Der Schneideinsatz ist auf einem Einstellteil gelagert, wobei der Schneideinsatz oder das Einstellteil zur Bildung eines Drehpunktes eine vorstehende Wölbung aufweist, und der Schneideinsatz weist zwei Einstellschrauben in Eingriff mit dem Einstellteil auf.

Durch das Vorsehen einer Verstellmöglichkeit durch Verschwenken der Schneideinsätze können die Schneideinsätze sehr genau positioniert werden. Diese Verstellung kann inbesondere als dritte Verstelldimension zusätzlich zur üblichen Verstellung in der axialen und radialen Richtung durchgeführt werden und so kann der Schneideinsatz mit höchster Genauigkeit justiert werden. Dabei kann durch die beidseits des durch die Wölbung definierten Drehpunktes angeordnete Einstellschrauben eine zuverlässige Zwei-Punkt-Verstellung bzw. Verschwenkung des Schneideinsatzes herbeigeführt werden, die allerdings maximal 1 mm Hub bewirkt, also eine Feinverstellung darstellt.

Vorteilhaft kann für die Klemmelemente ebenfalls eine Aufnahme vorgesehen sein, in der die Klemmelemente jeweils verschiebbar angeordnet sind. Auf diese Weise sind auch die Klemmelemente sicher im Grundkörper gehaltert und es kommt im wesentlichen nur zur Beaufschlagung der Klemmkräfte gegen die Schneideinsätze. Die Klemmelemente können formschlüssig in ihren Aufnahmen aufgenommen sein.

Bei einem bevorzugten Ausführungsbeispiel der Erfindung mit besonders guten Verstelleigenschaften umfaßt der Schneideinsatz einen drehbaren, die Schneide tragenden Schneidplattenträger.

Vorteilhaft kann der Schneideinsatz auf der mit dem Klemmelement in Eingriff tretenden Seite mit einer Schräge versehen sein. Diese ermöglicht eine große Kontaktfläche.

Vorzugsweise ist auch das Klemmelement auf der mit dem Schneideinsatz in Eingriff tretenden Seite mit einer Schräge versehen. Durch die Abschrägung kann eine Verkeilung von Schneideinsatz und Klemmelement herbeigeführt werden derart, daß sich aufgrund einer solchen formschlüssigen Verbindung das Klemmelement nicht mehr lösen kann. Somit kann sicher verhindert werden, daß es aufgrund dieser Verriegelungswirkung zu keinerlei sich lösenden Teilen mehr kommen kann.

Bei einer Ausführungsform des erfindungsgemäßen Messerkopfes ist als Verstellmittel für den Schneideinsatz ein Formglied vorgesehen, das mit einer komplementären Ausnehmung des Schneideinsatzes in Formzwangseingriff derart, daß eine Bewegung des Verstellmittels eine Bewegung des Schneideinsatzes in derselben Richtung herbeiführt. Durch diese Ausgestaltung ergibt sich eine stufenlose Bewegung des Schneidmessers in beiden Richtungen. Diese Verstellung erfolgt spielfrei und ist in einem definierten Durchmesserbereich möglich. Durch die Form der Ausnehmung, beispielsweise eine sich in Längsrichtung des Schneideinsatzes erstreckende Nut, kann eine Anpassung an die Form des Kopfes des Verstellmittels erzielt werden. Als Formen kommen beispielsweise Kugel, Ellipse, Rechteck, Trapez und viele mehr in Betracht. Es muß nur ein sicherer Betätigungseingriff sichergestellt werden.

Bei einem vorteilhaften Ausführungsbeispiel des erfindungsgemäßen Messerkopfes steht ein in radialer Richtung sich erstreckender, im Grundkörper befestigter Sicherungskeil mit dem in bezug auf die Vorderseite des Messerkopfes hinteren Ende des Schneideinsatzes in Eingriff, und zwar bevorzugt mit einer am Schneideinsatz vorgesehenen Nase. Dieser Sicherungskeil hat die Aufgabe, den Schneideinsatz gegen die Aufnahme von Axialkräften und damit gegen Verschiebung zu sichern. Zur Gewährleistung einer guten Drehbarkeit ist die Nase mit gewölbter Kontur ausgeführt.

Des weiteren kann im Grundkörper eine Ausnehmung für einen Eingriff mit dem in bezug auf die Messerkopfspitze hinteren Ende des Schneideinsatzes mit einer Form vorgesehen sein, die in ihrer Kontur der Form des Endes des Schneideinsatzes entspricht. Durch diesen Formschluß kommt es zu einer Konturanlage zwischen Schneideinsatz und Grundkörper, die eine sichere und stabile Aufnahme der axialen Schnittdrücke ermöglicht.

Bei dem erfindungsgemäßen Messerkopf kann als Verstellmittel für den Schneideinsatz in radialer und/oder axialer Richtung ein mit Formschluß gelagerter Verstellkeil vorgesehen sein.

Ferner kann als Verstellmittel für den Schneideinsatz in radialer und/oder axialer Richtung eine Versteilschraube vorgesehen sein.

Zweckmäßig ist die Verstellschraube eine Differentialschraube, die mit dem Schneideinsatz in Gewindeeingriff steht. Ein Vorteil der Ausgestaltung des Verstellglieds als Differentialschraube ergibt sich dadurch, daß sie eine raumsparende Ausgestaltung ermöglicht, denn anders als bei herkömmlichen Stellschrauben ist keine Durchgangsbohrung im Grundkörper des Messerkopfes erforderlich. Vielmehr kann eine Verstellung der Differentialschraube von der Schneidenseite her erfolgen. Dies bietet mehr Raum für die Schneide und weitere Teile des Messerkopfes. Außerdem ist die Anordnung sehr kompakt.

Bei einem bevorzugten Ausführungsbeispiel für die Klemmbefestigung des Schneideinsatzes ist ein Spannkeil oder -winkelstück oder eine Pratze vorgesehen. Zu deren Befestigung kann ferner beispielsweise eine normale Spannschraube, aber auch eine Differentialschraube verwendet werden.

Der Schneideinsatz kann vorteilhaft eine sich in Längsrichtung des Schneideinsatzes erstreckende Kassette in Blockform mit Gewinde/komplementärer Ausnehmung für einen Eingriff mit dem Verstellmittel sein. Die Kassette ist üblicherweise aus Stahl und das Schneidmesser kann durch eine Lötverbindung oder Formschluß mit der Kassette verbunden sein.

Der Schneideinsatz kann eine auf einen Träger aufgelötete Schneide, eine formschlüssig gelagerte Schneide oder auch eine mit einem Träger verschraubte Wendeplatte aufweisen. Geeignete Materialien für die Schneide und/oder Wendeplatte sind Hartmetall, Cermet, Keramik, CBN, polykristalliner, Natur- und synthetischem Diamant als Dünn- und Dickfilm.

Zweckmäßig ist eine Kühlmittelzufuhr im Grundkörper und/oder zum Schneideinsatz vorgesehen.

Eine Ausführung des Messerkopfes gemäß Anspruch 17 erlaubt insbesondere einen Einsatz bei hohen Drehzahlen. Dieser Messerkopf umfaßt somit einen Grundkörper und Schneideinsätze, die im Grundkörper jeweils in Ausnehmungen verstellbar und mittels eines in einer Ausnehmung angeordneten Klemmelements klemmbefestigt sind. Der Schneideinsatz sitzt formschlüssig in einer Aufnahme und ist mittels des Klemmelements in seiner Lage fixiert. Das Klemmelement ist ein Spannkeil, der formschlüssig in seiner Aufnahme aufgenommen ist.

Durch das Vorsehen einer Aufnahme mit Formschluß ist es erfindungsgemäß ermöglicht, den jeweiligen Schneideinsatz nicht nur über einen Teil seiner Außenfläche, sondern im wesentlichen vollständig im Grundkörper zu haltern, so daß es nicht erforderlich ist, am Umfang des Grundkörpers einen größeren offenen Bereich für die Ausnehmungen von Schneideinsätzen und Klemmelementen vorzusehen. Auf die Weise kommt es nicht zu einer Schwächung des Grundkörpers, sondern vielmehr geht sein gesamter Durchmesser in die Stabilität des Messerkopfes mit ein. Dies ist angesichts der schnell rotierenden Teile bei den hohen Drehzahlen außerordentlichen wichtig. Die formschlüssige Auf-' nahme der Schneideinsätze bewirkt außerdem einen außerordentlich sicheren Sitz der Schneideinsätze, der nun nicht mehr fast ausschließlich durch die Klemmbefestigung bestimmt ist. Mittels der Klemmelemente erfolgt lediglich die Lagefixierung der Schneideinsätze, nicht mehr jedoch ihre vollständige Halterung.

Zur radialen Verstellung der Schneideinsätze kann jeweils eine formschlüssig gelagerte Exzenterbüchse vorgesehen sein, in der der betreffende Schneideinsatz sitzt. D.h. die Mittenachse des Büchsenaußendurchmessers ist von der des Innendurchmessers verschieden, wobei die Differenz des Mittenversatzes den Verstellweg ergibt. Eine Drehung der Exzenterbüchse resultiert damit in einer Verschiebung des Schneideinsatzes radial einwärts oder auswärts. Das Klemmelement fixiert die Lage des Schneideinsatzes.

Alternativ kann eine Verstellung der Schneideinsätze mittels Keil oder Schraube vorgesehen sein.

Vorteilhaft ist erfindungsgemäß für die Klemmelemente ebenfalls eine Aufnahme vorgesehen, in der die Klemmelemente jeweils verschiebbar angeordnet sind. Auf diese Weise sind auch die Klemmelemente sicher im Grundkörper gehaltert und es kommt im wesentlichen nur zur Beaufschlagung der Klemmkräfte gegen die Schneideinsätze. Auch die Klemmelemente können formschlüssig in ihren Aufnahmen aufgenommen sein.

Bei einem bevorzugten Ausführungsbeispiel der Erfindung ist die Aufnahme für das Klemmelement so angeordnet, daß sie die Aufnahme des Schneideinsatzes kreuzt. Dies führt einerseits zu einer geringstmöglichen Schwächung des Grundkörpers dadurch, daß die verbundenen Aufnahmeräume zusammen lediglich eine kleine gemeinsame Ausnehmung bzw. Aussparung im Grundkörper bilden, d.h. einen minimalen Hohlraum in diesem. Andererseits bewirkt eine derartige Ausführung, daß die Eingriffsrichtungen von Klemmkräften und Montagekräften im wesentlichen im großen Winkel zu den Verstellkräften für die Schneideinsätze im Grundkörper wirken. Ferner ist es durchaus möglich, auch eine parallel oder quasi parallel verlaufende Aufnahme für das Klemmelement vorzusehen, wobei jedoch nur ein geringer Durchführungsbereich für den Klemmeingriff eine Verbindung zwischen diesen beiden Aufnahmen bildet.

Vorteilhaft ist der Schneideinsatz auf der mit dem Klemmelement in Eingriff tretenden Seite mit einer Schräge versehen. Diese ermöglicht eine große Kontaktfläche. Als zweckmäßig hat sich ein Schrägenwinkel von etwa 10° herausgestellt. Es können jedoch auch andere Winkel gewählt werden.

Vorzugsweise ist auch das Klemmelement auf der mit dem Schneideinsatz in Eingriff tretenden Seite mit einer Schräge versehen, die zweckmäßig einen kleineren Winkel als der Schrägenwinkel des Schneideinsatzes hat. Gemäß einem Ausführungsbeispiel der Erfindung ist die Differenz der Schrägenwinkel etwa 2°. Durch diese wechselseitige Abschrägung kann eine Verkeilung von Schneideinsatz und Klemmelement herbeigeführt werden derart, daß sich aufgrund einer solchen formschlüssigen Verbindung das Klemmelement nicht mehr lösen kann. Somit kann sicher verhindert werden, daß es aufgrund dieser Verriegelungswirkung zu keinerlei sich lösenden Teilen mehr kommen kann.

Das Merkmal der Ausstattung des Schneideinsatzes und/oder Klemmelements mit einer Schräge soll die Ausführung mit Exzenterbüchse mit umfassen. D.h. in diesem Fall kann dann die den Schneideinsatz umfassende Exzenterbüchse mit einer Schräge versehen sein und das Klemmelement mit der Exzenterbüchse in Eingriff stehen.

Alternativ kann im Grundkörper eine Aufnahmebohrung in einem Winkel zur Drehachse vorgesehen sein, in der eine Verstellbüchse für den Schneideinsatz sitzt. Eine Verstellung der Verstellbüchse mittels einer zugehörigen Schraube führt dann entsprechend der Verstellrichtung zu einer radialen Einwärts- oder Auswärtsverstellung des Schneideinsatzes.

Bei einer vorteilhaften Weiterbildung dieses Ausführungsbeispiels ist der Schneideinsatz in einer zweiteilig ausgeführten Stellbüchse gelagert. Der Teilungsschnitt durch diese Stellbüchse ist schräg, parallel zur Drehachse ausgeführt, weswegen diese Ausführung der Stellbüchse hier auch als Kegelbüchse bezeichnet wird. Wird dann ein Teil der Kegelbüchse durch eine mit diesem in Eingriff stehende Schraube verschoben, so kann sich beispielsweise der Spalt zwischen den beiden Teilen vergrößern und dadurch der andere Teil in derselben Richtung ebenfalls verschoben werden, was dann zu einer Durchmesservergrößerung führt. In umgekehrter Richtung erfolgt eine Einwärtsverstellung des Schneideinsatzes.

Zur Verstellung des Schneideinsatzes kann beispielsweise eine Differentialschraube vorgesehen sein, wobei der Schneideinsatz eine auf einen Träger gelötete Schneide oder auch eine mit einem Träger verschraubte Wendeplatte aufweisen kann. Andere Ausführungen sind möglich. Zwecksmäßig besteht die Schneide- und/oder Wendeplatte aus Hartmetall, Cermet, Keramik, CBN, polykristallinem, Natur- und synthetischem Diamant als Dünn- und Dickfilm.

Eine zweckmäßige Ausführung des Schneideinsatzes kann L-förmig sein, wobei sich die Schneide im vorderen Bereich des kurzen Schenkels befindet, während sich die Schräge am langen Schenkel befindet.

Zur Erzielung einer weiteren Verstelldimension der Schneideinsätze zusätzlich zur axialen und radialen Richtung kann der Schneideinsatz einen drehbaren, die Schneide tragenden Schneidplattenträger umfassen. Durch zweckmäßig beidseits des Drehpunktes angeordnete Einstellschrauben kann eine zuverlässige Zwei-Punkt-Verstellung bzw. Verschwenkung des Schneidteils herbeigeführt werden.

Bei einem vorteilhaften Ausführungsbeispiel eines Schneideinsatzes trägt dieser eine bewegliche Schneidplatte, gegen die sich ein in einem Winkel auftreffender Stiftkörper mit seinem einen Ende in Anlage befindet. Der der Stiftkörper übt gegen die Schneidplatte Druck nach außen aus und liegt mit seinem anderen Ende an der Schrägfläche eines Verstellelements an. Zweckmäßig ist der Stiftkörper ein Stift. Er kann auch eine Schraube oder eine Schraube mit beweglicher Anlageplatte sein. Als Verstellelement kann eine Kegelschraube dienen. Diese enthält automatisch eine Ringanlage 2und bewirkt auf einfache Weise die Vorspannung, mit der der Stiftkörper an der Schneidplatte anliegt. Mit einer solchen Schneideinsatzausgestaltung kann eine Feinverstellung im Bereich bis etwa 6/100 mm durchgeführt werden.

Im Grundkörper ist zweckmäßig eine Kühlung vorgesehen.

Die Erfindung wird im folgenden weiter anhand von Ausführungsbeispielen und der Zeichnung beschrieben. Diese Darstellung dient lediglich zur Erläuterung der Erfindung und soll im einzelnen, ebenso wie die Zusammenfassung der Merkmale der Unteransprüche, nicht zur Einschränkung der Erfindung herangezogen werden. In der Zeichnung zeigen:
- Fig. 1: eine seitliche Teilschnittansicht eines Grundkörpers eines Messerkopfes gemäß einem ersten Ausführungsbeispiel der Erfindung mit durch Schwenken verstellbaren Schneideinsätzen, von denen einer gezeigt ist,
- Fig. 2: eine Draufsicht des Grundkörpers von Fig. 1, zum Teil im Schnitt,
- Fig. 3: eine seitliche Teilschnittansicht eines Grundkörpers eines Messerkopfes gemäß einem zweiten Ausführungsbeispiel der Erfindung mit durch Schwenken verstellbaren Schneideinsätzen, von denen einer gezeigt ist,
- Fig. 4: eine Draufsicht des Grundkörpers von Fig. 3, zum Teil im Schnitt,
- Fig. 5: eine Seitenansicht eines Messerkopfes mit Aufnahme,
- Fig. 6: eine seitliche Teilschnittansicht eines Grundkörpers eines Messerkopfes gemäß einem dritten Ausführungsbeispiel der Erfindung mit durch Schwenken verstellbaren Schneideinsätzen, von denen einer gezeigt ist,
- Fig. 7: eine Draufsicht des Grundkörpers von Fig. 6,
- Fig. 8: eine vergrößerte Darstellung einer seitlichen Teilschnittansicht ähnlich Fig. 6 eines Grundkörpers eines Messerkopfes gemäß einem vierten Ausführungsbeispiel der Erfindung mit durch Schwenken verstellbaren Schneideinsätzen, von denen einer gezeigt ist,
- Fig. 9: eine Ansicht eines Schneideinsatzes des vierten Ausführungsbeispiels ähnlich wie in Fig. 5,
- Fig. 10: eine Seitenansicht des Schneideinsatzes von Fig. 8,
- Fig. 11: eine seitliche Teilschnittansicht eines Grundkörpers eines Messerkopfes gemäß einem fünften Ausführungsbeispiel der Erfindung mit drehbarem Schneideinsatz,
- Fig. 12: eine seitliche Teilschnittansicht des Schneideinsatzes von Fig. 11,
- Fig. 13: eine vergrößerte Ansicht des Schneideinsatzes von Fig. 11,
- Fig. 14: eine Seitenansicht eines Grundkörpers eines Messerkopfes gemäß einem sechsten Ausführungsbeispiel der Erfindung,
- Fig. 15: eine Draufsicht des Grundkörpers von Fig. 14,
- Fig. 16: eine Schnittansicht längs Linie A-A in Fig. 15,
- Fig. 17: eine Ansicht des Grundkörpers von Fig. 14 von unten,
- Fig. 18: (a) bis (d) Ansichten eines Schneideinsatzes von oben (a), von der Seite, zum Teil fortgebrochen (b), von der Seite (c) und im Schnitt (d),
- Fig. 19: (a) eine Seitenansicht und (b) eine Vorderansicht eines Spannkeils,
- Fig. 20: eine Seitenansicht des Messerkopfes von Fig. 14 nach der Montage,
- Fig. 21: eine Draufsicht des Messerkopfes von Fig. 20,
- Fig. 22: eine Draufsicht einer Variante des Messerkopfs von Fig. 21,
- Fig. 23: eine Draufsicht ähnlich Fig. 21, die in einer ausgebrochenen Teilschnittansicht den Klemmeingriff von Schneideinsatz und Spannkeil zeigt,
- Fig. 24: (a) bis (d) Ansichten eines Schneideinsatzes von oben (a), von der Seite, zum Teil fortgebrochen (b), von der Seite (c) und im Schnitt (d),
- Fig. 25: eine Seitenansicht eines Messerkopfes gemäß einem siebten Ausführungsbeispiel der Erfindung mit einem Schneideinsatz gemäß Fig. 24,
- Fig. 26: Ansichten eines L-förmigen Schneideinsatzes im Schnitt durch den kurzen Schenkel (a) und von der Seite, z.T. fortgebrochen (b),
- Fig. 27: und 28 eine Teilansicht und eine Teilschnittansicht eines weiteren Schneideinsatzes, der drehbar ist, sowie
- Fig. 29: eine Teilschnittansicht eines Messerkopfes gemäß einem achten Ausführungsbeispiel der Erfindung.

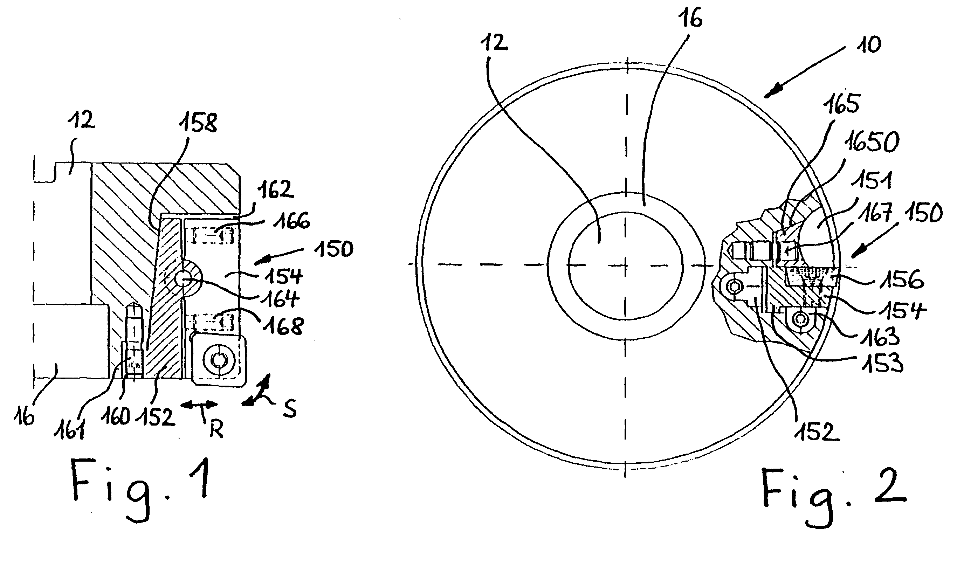

Es wird zunächst anhand von Fig. 1 und 2 ein erstes Ausführungsbeispiel eines erfindungsgemäßen Messerkopfes beschrieben. Ein Grundkörper 10 aus beispielsweise Stahl und Aluminium weist eine zentrale Bohrung 12 und eine Schraubenaufnahme 16 für eine Befestigungsschraube auf. Eine nicht dargestellte durchgehende Bohrung dient zur Aufnahme eines Spannwerkzeuges.

Im Grundkörper 10 sitzen gleichmäßig über seinen Umfang verteilt formschlüssig in Aufnahmen aufgenommene Schneideinsätze 150. An die Aufnahmen schließen sich Spannuten 151 an. Die Schneideinsätze 150 bestehen aus einem keilförmigen Einstellteil 152 und einem die Schneide tragenden Schneidteil 154. Die Schneide ist im veranschaulichten Ausführungsbeispiel eine verschraubte Wendeplatte 156. Das Einstellteil 152 weist eine in bezug auf die Grundkörperachse schräge verlaufende Anlagekante 158 zum Grundkörper 10 hin auf, von der sich ein Verstellansatz 160 mit Verstellschraube 161 radial einwärts erstreckt. In axialer Richtung ist zwischen dem Einstellteil 152 und dem Grundkörper 10 ein Spalt 162 freigelassen. Der Schneideinsatz 150 kann durch axiale Verstellung des Einstellteils 152 parallel zu dessen Anlagekante 158 in der radialen und axialen Richtung verstellt werden. Ein als Sicherungskeil dienender Spannkeil 163 ist zur Gewährleistung einer radialen Spannung, d.h. zur Verspannung des Schneidteils 154 mit dem Einstellteil 152, d.h. ist in Eingriff mit einer an diesem vorgesehenen Nase 153, vorgesehen. Weiter zur Verspannung des Schneideinsatzes 150 dient ein Spannkeil 165 mit einer Verstellschraube 167, der in einer von der Spannut 151 aus sich verjüngenden Aufnahme 1650 sitzt. Außerdem ist das Schneidteil 154 durch eine vorstehende Wölbung zur Bildung eines Drehpunktes 164 drehbar in bezug auf das Einstellteil 152 gelagert. Für eine Verschwenkung des Schneidteils 154 weist dieses zwei Einstellschrauben 166, 168 auf. Wie die Pfeile R und S veranschaulichen, können durch das Einstellteil 152, 160 eine radiale Verstellung und durch die Drehpunktlagerung 164, 166, 168 eine Schwenkverstellung erzielt werden.

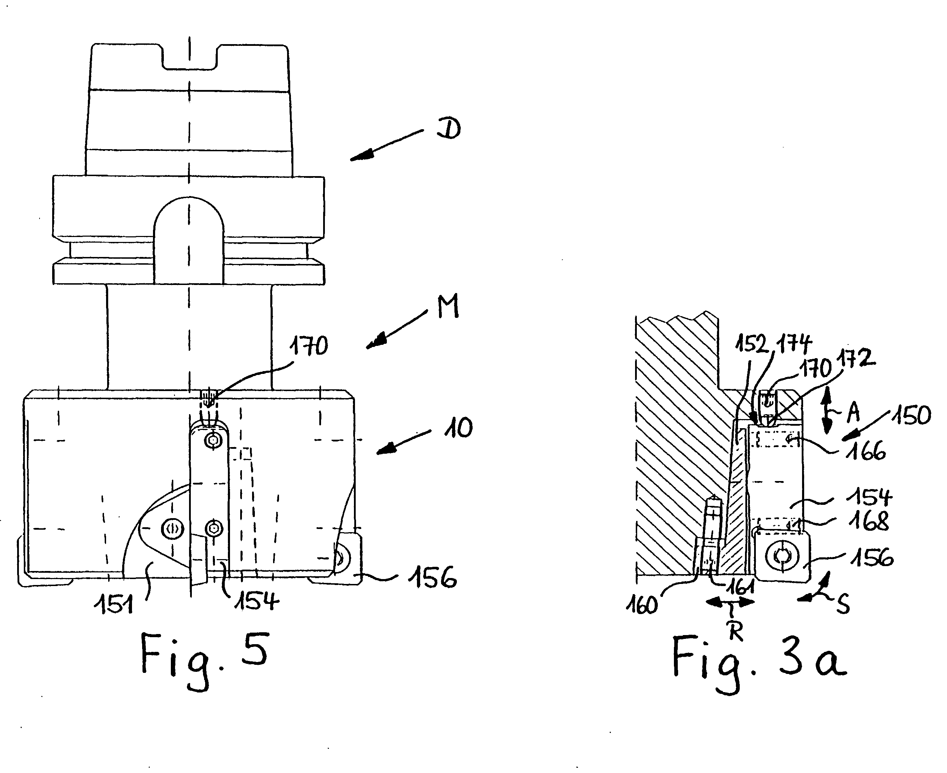

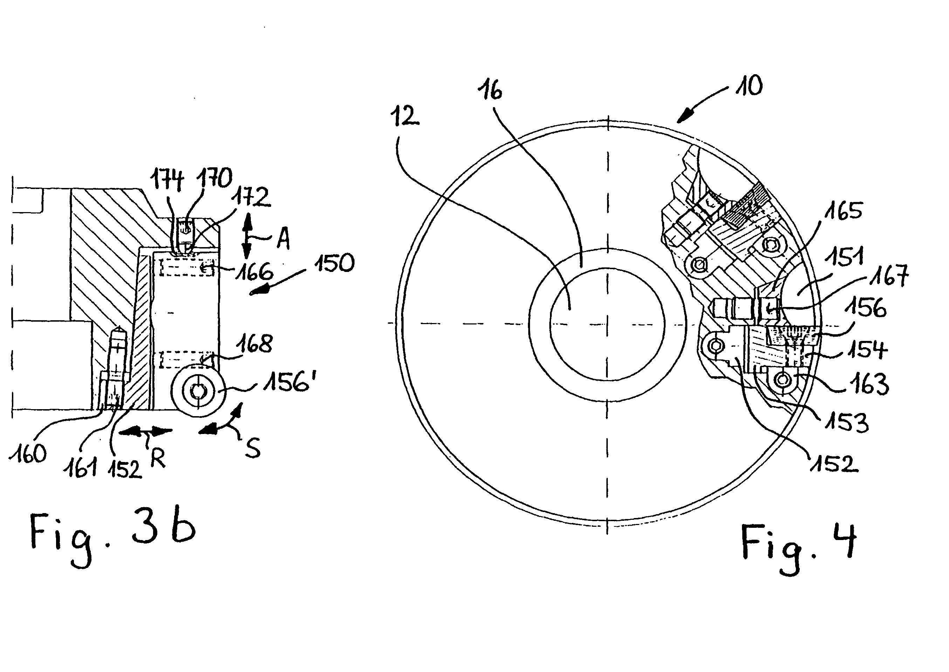

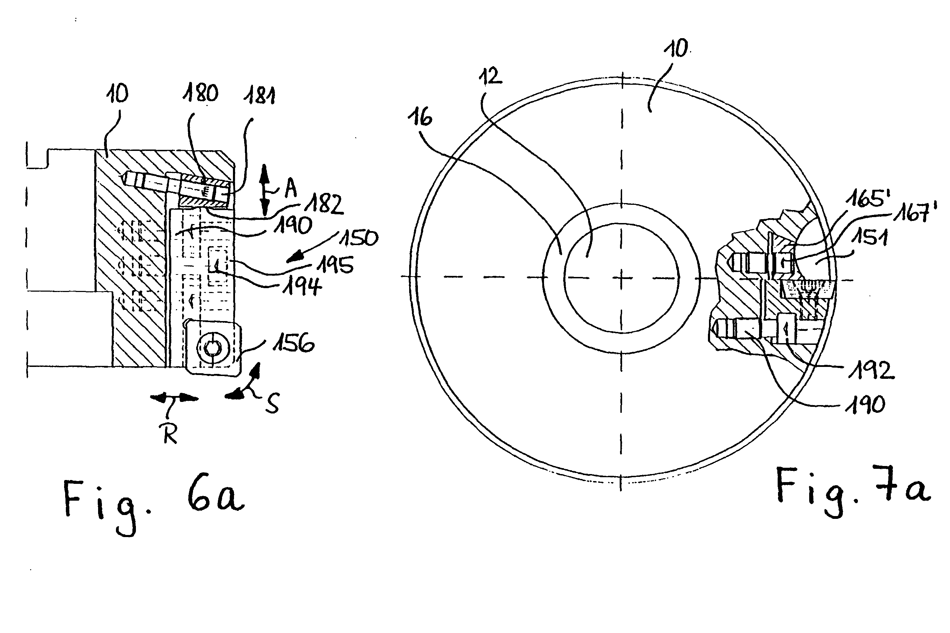

Als nächstes wird mit Bezug auf Fig. 3a, 3b, 4 sowie 5 ein zweites Ausführungsbeispiel eines erfindungsgemäßen Messerkopfes 10 beschrieben. Soweit die Teile die gleichen wie beim vorhergehend erläuterten Ausführungsbeispiel sind, sind sie mit denselben Bezugszeichen bezeichnet und werden nicht erneut beschrieben. Dieser Messerkopf weist zusätzlich eine im Grundkörper 10 axial angeordnete Verstellschraube 170 auf, die eine Verstellung des Schneideinsatzes in der axialen Richtung ermöglicht (Pfeil A). Mit dem vorderen Ende 172 steht die Verstellschraube 170 mit einer Ausnehmung 174 im Schneidteil 154 in Eingriff. Außerdem ist der Schneideinsatz 150 in der radialen Richtung verstellbar (Pfeil R) und verschwenkbar (Pfeil S). Während die Wendeplatte 156 bei dem Beispiel von Fig. 3a wie im Fall des ersten Ausführungsbeispiels einen rechteckigen Querschnitt hat, ist dieser bei dem Beispiel von Fig. 3b rund. Fig. 5 zeigt in Form einer Seitenansicht eine Gesamtdarstellung eines Messerkopfes M mit Werkzeugaufnahme D.

Anhand von Fig. 6 wird nun ein drittes Ausführungsbeispiel eines erfindungsgemäßen Messerkopfes 10 beschrieben. Soweit die Teile die gleichen wie beim vorhergehend erläuterten Ausführungsbeispiel sind, sind sie mit denselben Bezugszeichen bezeichnet und werden nicht erneut beschrieben. Dieser Messerkopf weist statt der Verscellschraube 170 des zweiten Ausführungsbeispiels einen im Grundkörper 10 radial formschlüssig in einer Aufnahme angeordneten Verstellkeil 180 mit einer Verstellschraube 181 auf, der eine Verstellung des Schneideinsatzes in der axialen Richtung ermöglicht (Pfeil A). Der Verstellkeil 181 befindet sich mit einer kleinen Auswölbung 182 des Schneideinsatzes 150 in Eingriff. Eine radiale Verstellung des Verstellkeils 180 hat eine axiale Verstellung des Schneideinsatzes 150 zur Folge. Eine radiale Verstellung (Pfeil R) ist über im folgenden noch mehr im einzelnen erläuterte Verstellmittel ermöglicht, wobei während des betreffenden Verstellvorgangs der Verstellkeil 180' dann gelöst und anschließend wieder fixiert wird. Zur Lagefixierung ist ferner eine in einer Aufnahme 195 gelagerte Schraube 194 vorgesehen.

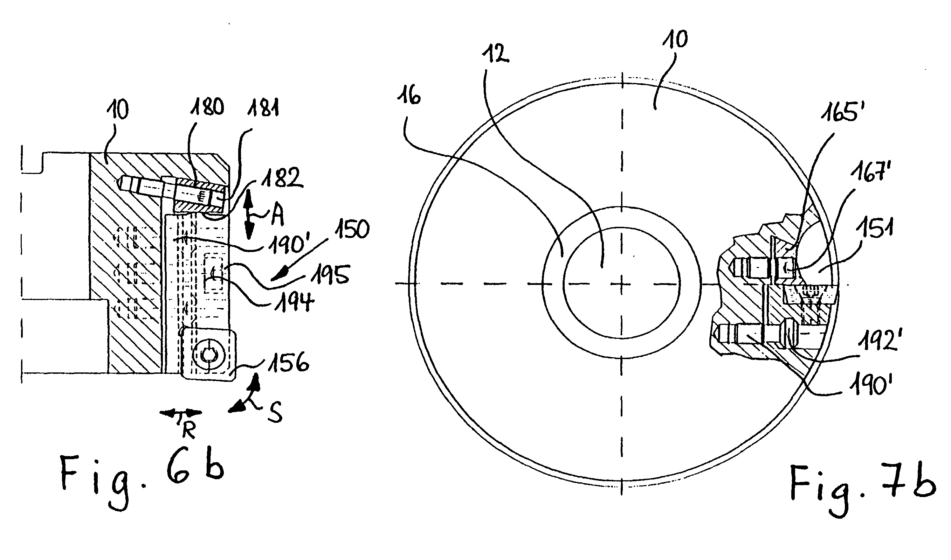

Das in Fig. 6 und 7 gezeigte dritte Ausführungsbeispiel der Erfindung hat als Verstellmittel für den Schneideinsatz 150 statt eines Einstellteils 152 und Verstellansatzes 160 gewindeversehende Formglieder 190, deren Formteil 192 im Fall des Beispiels von Fig. 6a, 7a rechteckförmig ist. Bei dem alternativen Beispiel der Formglieder 190' von Fig. 6b, 7b ist das Formteil 192' keilförmig ausgebildet. Das Formteil 192 steht mit einer komplementären Ausnehmung 196 des Schneideinsatzes 150 in Formzwangseingriff. Durch eine Bewegung des Formglieds 190 wird eine Bewegung des Schneideinsatzes 150 in radialer Richtung herbeiführt. Ferner ist der Schneideinsatz 150 verschwenkbar (Pfeil S). Anders als bei den zuvor gezeigten Ausführungsbeispielen ist der Spannkeil 165' so ausgebildet, daß er in einer sich zur Spannut 151 sich verjüngenden Aufnahme 1650' verliersicher sitzt, was insbesondere für Hochgeschwindigkeitsmesserköpfe sehr vorteilhaft ist.

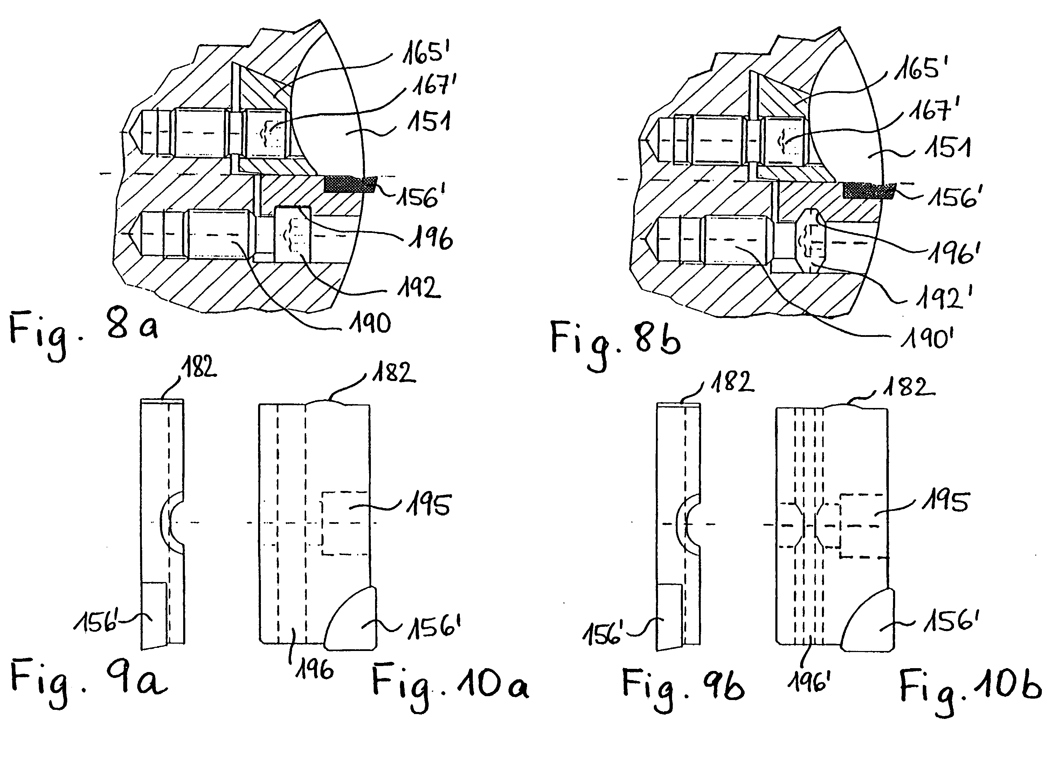

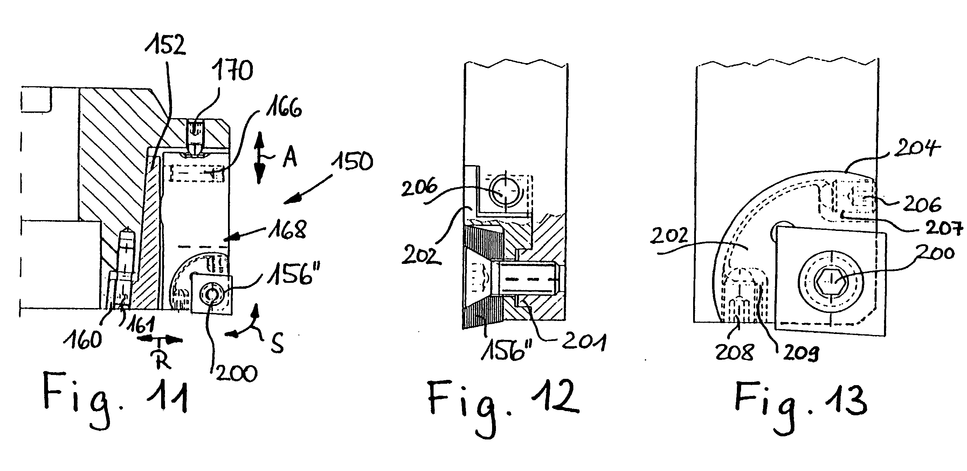

Fig. 8, 9 und 10 zeigen in vergrößerter Darstellung ein viertes Ausführungsbeispiel der Erfindung, das sich von dem dritten Ausführungsbeispiel in der Schneide unterscheidet, die hier eine aufgelötete Schneide 156' ist.

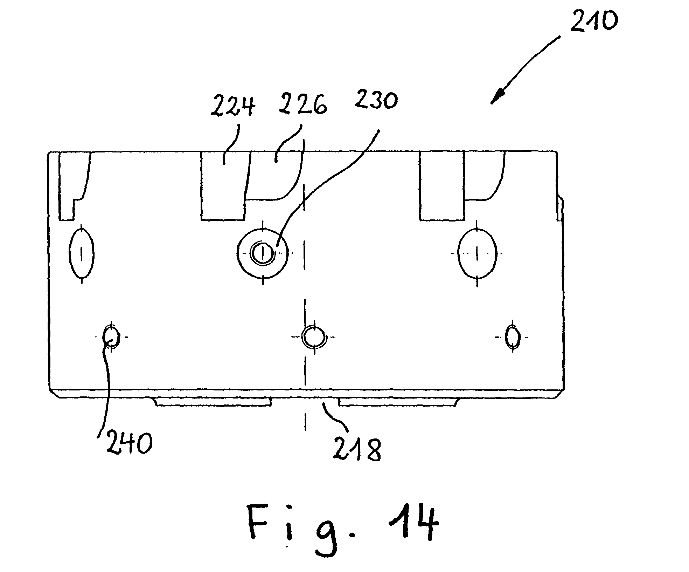

Fig. 11 bis 13 zeigen ein fünftes Ausführungsbeispiel eines erfindungsgemäßen Messerkopfes 10. Soweit die Teile die gleichen wie bei den vorhergehend erläuterten Ausführungsbeispielen sind, sind sie mit denselben Bezugszeichen bezeichnet und werden nicht erneut beschrieben. Aus Gründen der Übersichtlichkeit ist die Verstellschraube 168 lediglich angedeutet. Als Schneide ist wiederum eine Wendeplatte 156" vorgesehen.

Die Wendeplatte 156" ist mittels einer Schraube 200 in einem Wendeplattenträger 202 befestigt, der um einen etwa mit der Schraube 200 zusammenfallenden Drehpunkt drehbar ist. Entsprechend ist im Grundkörper 10 eine Lagerfläche 204 mit Kreisauschnittkontur vorgesehen. Der Schneidteil 154 weist am Drehpunkt einen Bund 201 auf. Dieser dient zur formschlüssigen Fixierung des Schneidteils. Zur Verstellung des Trägers 202 dienen zwei Verstellschrauben 206, 208 an entgegengesetzten Enden. Die Verstellschrauben 206, 208 können wie gezeigt in Verstellaufnahmen 207, 209 im Träger 202 sitzen. Alternativ können sie in Eingriff mit Verstellnasen am Schneideinsatz angeordnet sein. Es kann ferner eine nicht gezeigte Führung für die Drehbewegung vorgesehen sein.

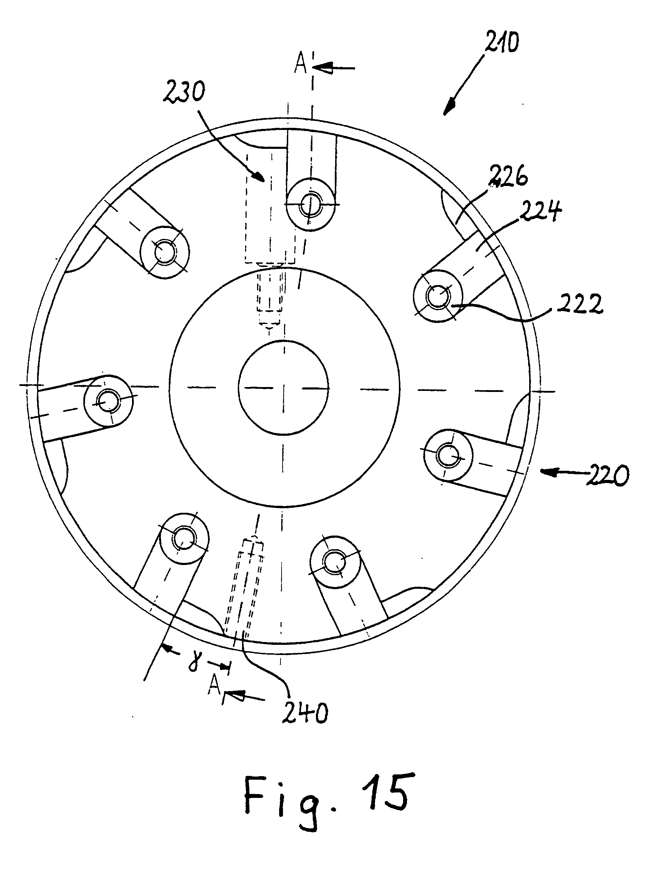

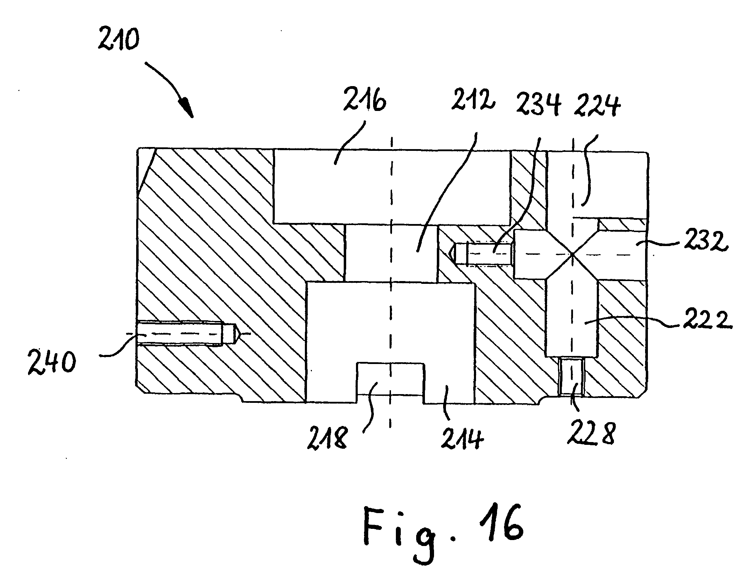

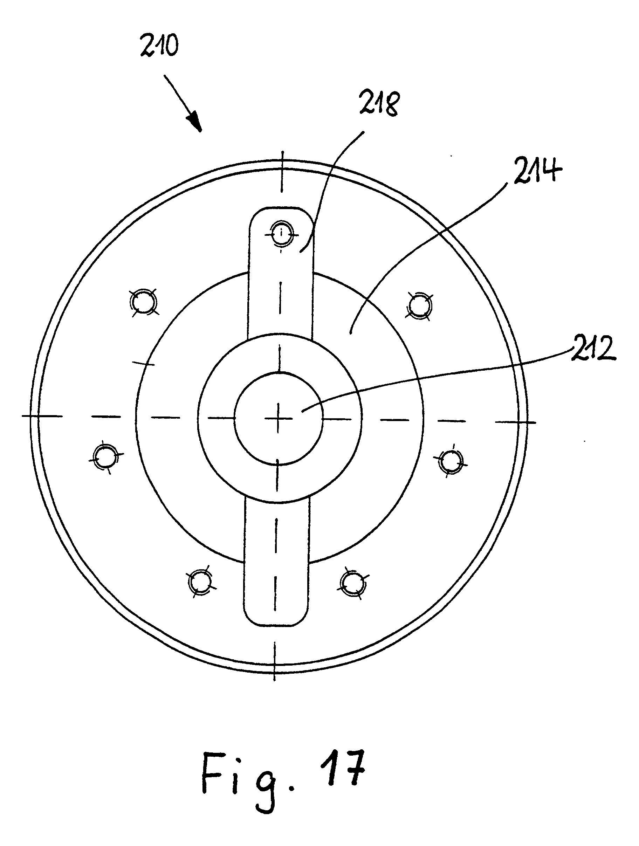

Es wird im folgenden zunächst anhand von Fig. 14 bis 18 ein Grundkörper für einen Messerkopf gemäß einem sechsten Ausführungsbeispiel der Erfindung beschrieben. Ein solcher Grundkörper 210 weist eine zentrale Bohrung 212, einen Aufnahmeausnehmung 214 und eine Schraubenaufnahme 216 für eine Befestigungsschraube auf. Eine durchgehende Bohrung, hier eine Ausnehmung 218 dient zur Aufnahme eines Spannwerkzeuges.

Der Grundkörper 210 aus beispielsweise Stahl und Aluminium weist zehn gleichmäßig über seinen Umfang verteilte Aufnahmen 220 für später noch beschriebene Schneideinsätze auf, die im wesentlichen aus einer zur Achse des Grundkörpers 210 koaxialen Aufnahmebohrung 222 und einer sich im stirnseitigen Bereich des Grundkörpers 210 radial nach außen erstreckenden Ausnehmung 224 bestehen. An die Ausnehmungen 224 schließen sich Spanraumausnehmungen 226 an. Die Aufnahmebohrungen 222 erstrecken sich nicht ganz bis zur Unterseite des Grundkörpers 210, sondern es schließen sich an ihr unteres Ende jeweils Verstellelementbohrungen 228 an.

Weiter weist der Grundkörper 210 die Aufnahmebohrungen 222 kreuzende, sich vom Umfang radial einwärts erstreckende Spannkeilbohrungen 230 auf. Diese bestehen aus einer die Aufnahmebohrung 222 kreuzenden Bohrung 232 und einer sich daran anschließenden Bohrung 234 mit kleinerem Durchmesser und Innengewinde für eine Verstellschraube. Die Lage der Spannkeilbohrung 230 auf dem Umfang im Winkel in bezug auf die Lage der koaxialen Aufnahmebohrung 220 ist etwas versetzt, so daß sich die Spannkeilbohrung 230 mit kleinem Überlapp, jedoch hauptsächlich mit Abstand unterhalb des Spanraums 226 befindet.

Weiter sind axial mit Abstand und unterhalb von den Spannkeilbohrungen 230 zehn Gewindebohrungen 240 zur Aufnahme von Wuchtschrauben vorgesehen. Die Wuchtschrauben sind etwa unterhalb des in Drehrichtung vorderen Bereichs der Spanräume, d.h. in bezug auf die Umfangsausnehmungen 224 der Schneideinsatzaufnahmen 220 um einen Winkel γ von 10° versetzt angeordnet.

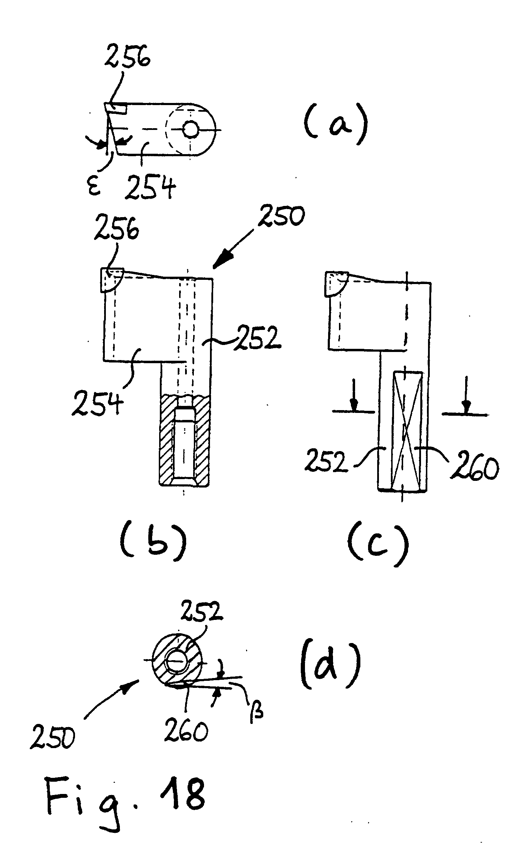

Fig. 18 zeigt ein Ausführungsbeispiel eines Schneideinsatzes 250 beispielsweise aus Stahl für einen Messerkopf gemäß der Erfindung. Der Schneideinsatz ist L-förmig mit einem langen Schenkel bzw. Schaft 252 und einem kurzen Schenkel 254. Der Schneideinsatz 250 besteht im gezeigten Ausführungsbeispiel aus einem Träger mit gelöteter Schneide 256. Die zum kurzen Schenkel 254 gehörige Stirnfläche des Schneideinsatzes ist in bezug auf die Normale zur Längsachse in einem Winkel δ von 5° geneigt. Der Abschrägungswinkel ε der Stirnseite des kurzen Schenkels 254 beträgt im veranschaulichten Ausführungsbeispiel 15°. Durch den langen Schenkel bzw. Schaft 252 erstreckt sich von dessen Stirnseite eine Gewindebohrung 258, die zur Aufnahme einer Differentialschraube für die axiale Verstellung des Schneideinsatzes 250 dient. Am Außenumfang des Schneideinsatzes 250 weist dieser über einen Großteil der Länge seines Schaftes 252 eine ebene Schräge 260 auf derart, daß diese einen Winkel β von etwa 10° in bezug auf die Umfangstangentiale aufweist, wie am besten aus Fig. 18 (e) ersichtlich ist. Diese Schräge 260 dient für einen Eingriff mit dem einem nun beschriebenen Spannkeil.

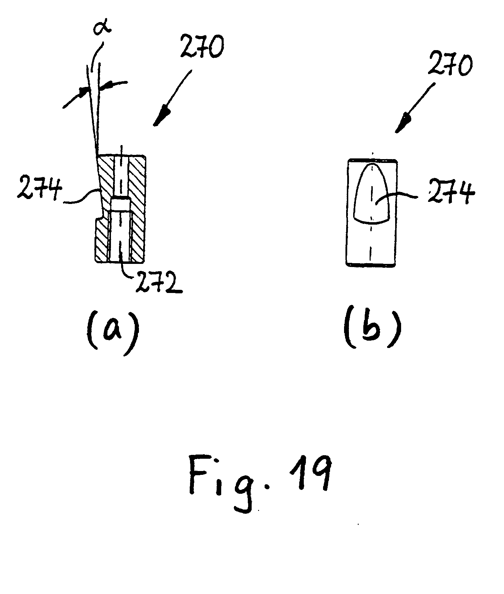

Fig. 19 zeigt einen Spannkeil 270, der eine Gewindebohrung 272 aufweist. Auf einer Seite (in Fig. 19 links dargestellt) weist der Spannkeil 270 eine Schräge 274 auf, die in einem Winkel α von etwa 8° in bezug auf die Achse des Spannkeils 270 verläuft. Die Schräge 274 des Spannkeils 270 ist für einen Eingriff mit der Schräge 260 eines zugehörigen Schneideinsatzes 250 vorgesehen.

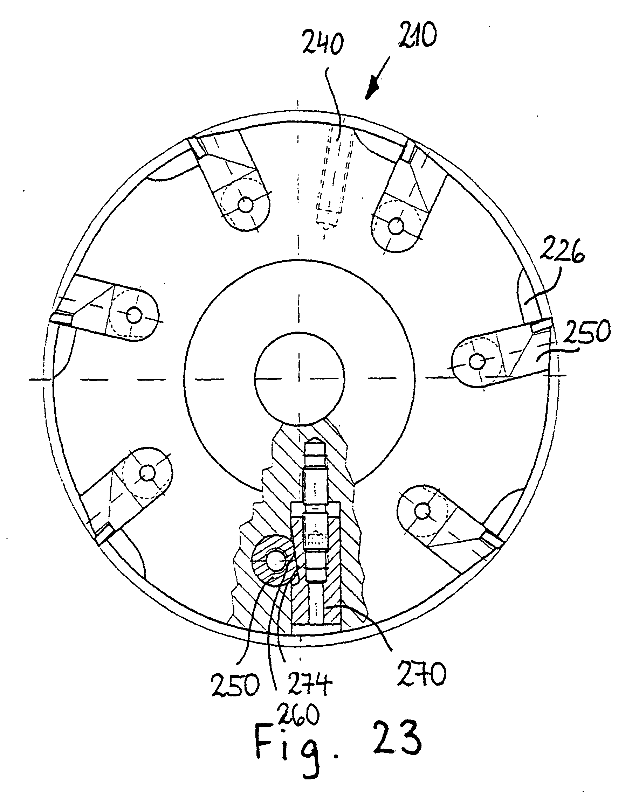

Die relative Lage der Schrägen 260 und 274 von Schneideinsatz 250 und Spannkeil 270 ist in Fig. 23 an der fortgebrochenen Teilschnittansicht ersichtlich. Wie diese Ansicht veranschaulicht, ergibt sich aufgrund der unterschiedlichen Abschrägungen der Schrägen 260 und 274 eine selbsthaltende Verkeilwirkung. Dabei wird zunächst der Spannkeil 270 eingesetzt und anschließend der Schneideinsatz 250. Beim Einsetzen wird der Schneideinsatz in Richtung der Aufnahmewand gedreht, wobei er aufgrund dieser Winkeldifferenz von 2° immer mehr fixiert wird. Während des Schneidbetriebes kann indessen kein Lösen erfolgen, da vielmehr aufgrund der Gewinderichtungen und Einsetzrichtungen eine immer stärkere Verklemmung erfolgt.

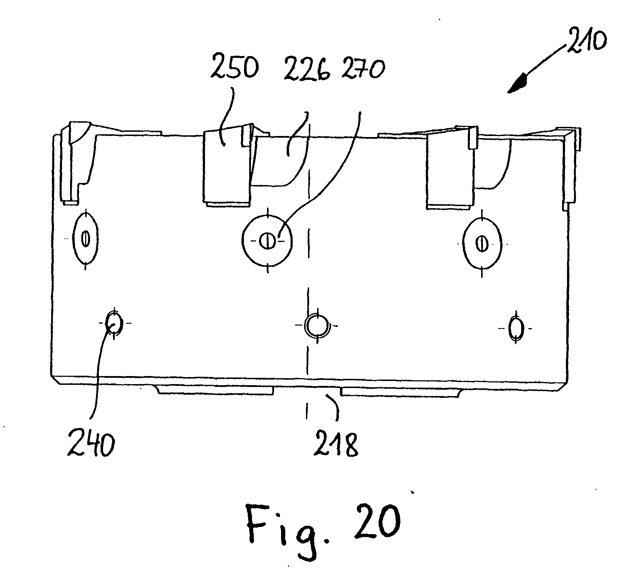

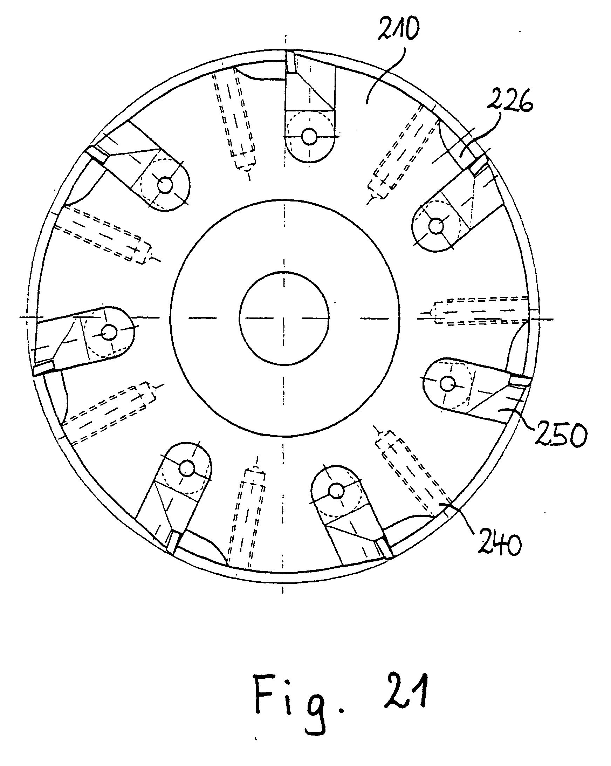

Fig. 20 und 21 zeigen den aus den oben beschriebenen Teilen zusammengesetzten Messerkopf nach der Montage.

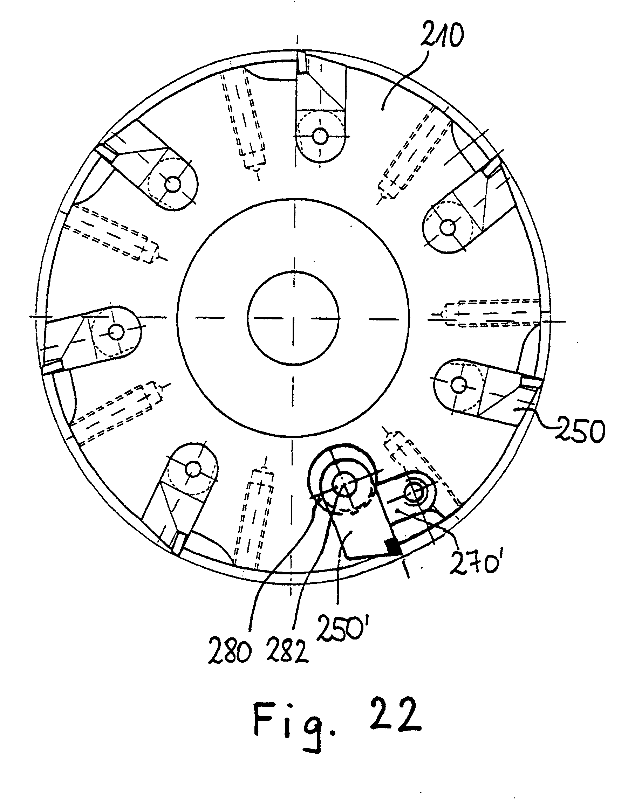

In Fig. 22 ist eine alternative Anordnung eines Spannkeils 270', nämlich in axialer Anordnung statt in radialer Anordnung wie beschrieben, veranschaulicht. Auch in diesem Fall ist ein Formschluß vorgesehen, so daß sich der Spannkeil bei Betrieb nicht mehr lösen kann.

In Fig. 22 ist ferner eine Ausführungsalternative veranschaulicht, bei der der Schneideinsatz 250' in einer formschlüssig im Grundkörper 210 gelagerten Exzenterbüchse 280 sitzt. Die Achse 282 der Aufnahmebohrung des Schneideinsatzes 250' ist in der Exzenterbüchse zur Mittenachse versetzt angeordnet. Eine Drehung der Exzenterbüchse 280 bewirkt eine Verstellung des Schneideinsatzes 250' in radialer Richtung. Hierzu kann beispielsweise ein Gewindeeingriff in der Exzenterbüchse vorgesehen sein.

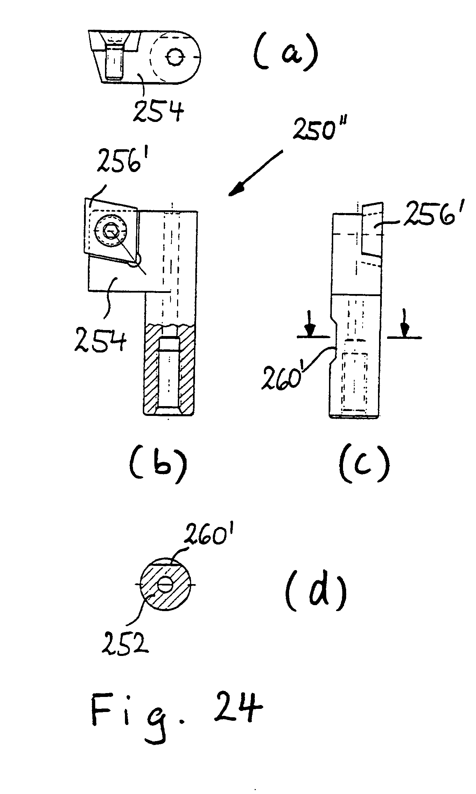

Eine alternative Ausführungsform eines Schneideinsatzes 250" zeigt Fig. 24. Dort ist bei 256' eine verschraubte Wendeplatte dargestellt. In diesem Fall ist es beispielsweise nicht erforderlich, wie bei Schneideinsätzen mit gelöteter Schneide, diese komplett auszutauschen, sondern es kann alternativ lediglich die Wendeplatte ausgetauscht werden. Eine Ausnehmung 260' ersetzt die ebene Schräge 260.

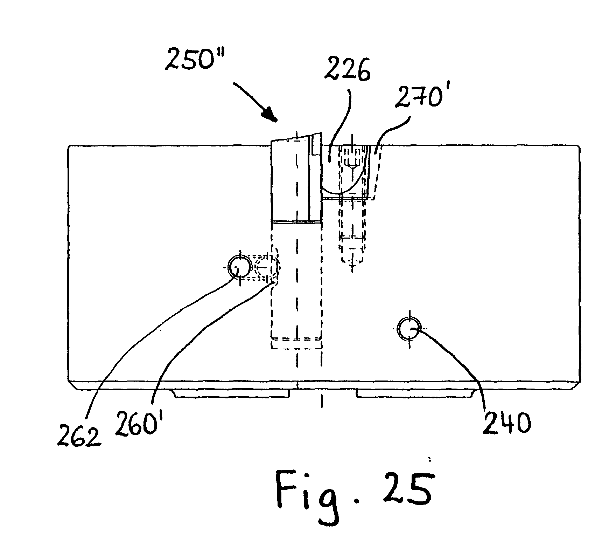

Fig. 25 zeigt eine Seitenansicht eines Schneideinsatzes 250" wie in Fig. 24 gezeigt, bei der eine in einem Winkel auftreffende Schraube 262 in die Ausnehmung 260' eingreift. Weiter ist ein axial angeordneter Spannkeil 270' zu sehen.

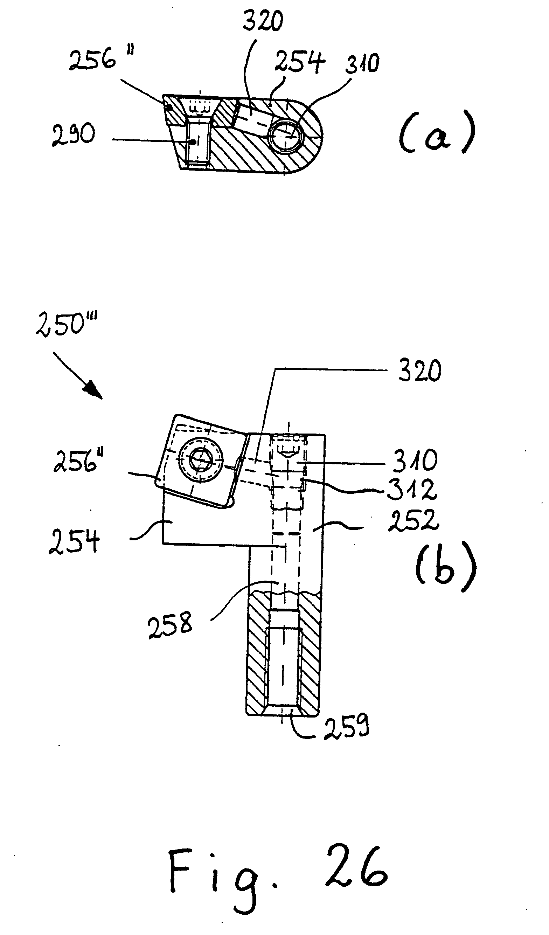

Das in Fig. 26 dargestellte Ausführungsbeispiel eines Schneideinsatzes 250"' unterscheidet sich von den vorangegangenen in der Feinverstellung der Schneidplatte 256". Es ist wie zuvor eine axiale Gewindebohrung 258 zur Aufnahme einer Differentialschraube 259 für die axiale Verstellung des Schneideinsatzes vorgesehen. Zur Feineinstellung in Durchmesserrichtung dient ein Stiftelement, hier ein Stift 320, der mit seinem inneren Ende an einer Kegelschraube 310 anliegt und mit seinem äußeren Ende die Schneidplatte 256" mit Vorspannung druckbeaufschlagt. Bei Erhöhung des Drucks, den der Stift 320 ausübt, ergibt sich eine Verstellung der Schneidplatte mit Durchmesseränderung in der Größenordnung von 1/100 mm. Für derartige Druckänderungen bzw. Feinverstellungen wird die im langen Schaft 252 sitzende Kegelschraube 310 verstellt.

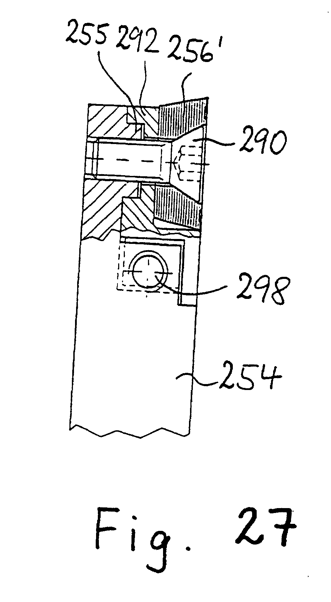

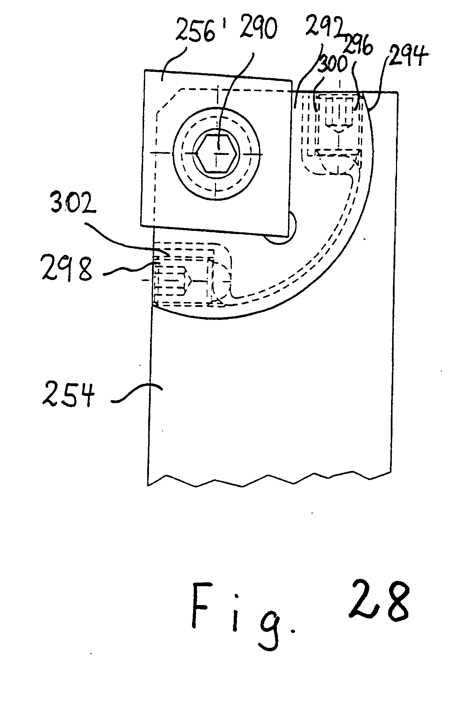

Fig. 27 und 28 zeigen drehbare Schneideinsätze. Soweit die Teile gleich vorherbeschriebenen sind, sind sie mit denselben Bezugszeichen bezeichnet. Die Wendeplatte 256' ist mittels einer Schraube 290 in einem Schneidplattenträger 292 befestigt, der um einen etwa mit der Schraube 290 zusammenfallenden Drehpunkt drehbar ist. Entsprechend ist im kurzen Schenkel 254 des Schneideinsatzes eine Lagerfläche 294 mit Kreisauschnittkontur vorgesehen. Der Schneidplattenträger 292 weist am Drehpunkt einen Bund 255 auf. Dieser dient zur formschlüssigen Fixierung des Schneidplattenträgers. Zur Verstellung des Schneidplattenträgers 292 dienen zwei Verstellschrauben 296, 298 an entgegengesetzten Enden. Die Verstellschrauben 296, 298 können wie gezeigt in Verstellaufnahmen 300, 302 im Schneideinsatz 292 sitzen. Alternativ können sie in Eingriff mit Verstellnasen am Schneideinsatz angeordnet sein. Es kann ferner eine in Fig. 23 nicht gezeigte Führung für die Drehbewegung vorgesehen sein.

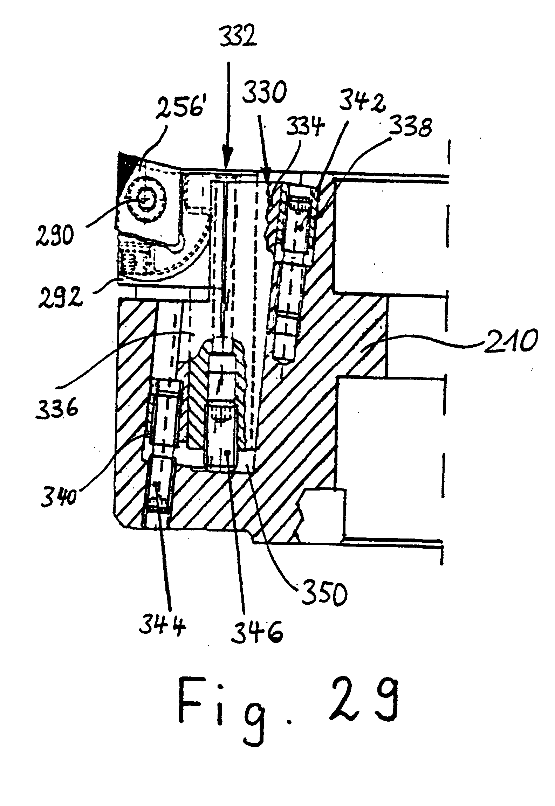

Fig. 29 zeigt ein weiteres Ausführungsbeispiel eines erfindungsgemäßen Messerkopfes. Dieses weist Schneideinsätze 292, wie in Fig. 28, gezeigt auf. Diese werden daher nicht mehr im einzelnen beschrieben. Selbstverständlich können auch andere Schneideinsätze verwendet werden. Die Schneideinsätze 292 stehen jeweils mit einer insgesamt zylinderförmigen Stellbüchse 330 in Eingriff, die in einer in bezug auf die Drehachse des Messerkopfes schräg (z.B. 5°) im Grundkörper 210 ausgeführten Lagerbohrung 350 gelagert ist. Die Stellbüchse 330 ist zweiteilig, wobei sie durch einen schräg in Längsrichtung verlaufenden Teilungsschnitt 332 getrennte Teile 334, 336 aufweist. Beide Stellbüchsenteile 334, 336 sind an ihrem jeweils breiteren Stirnseitenbereich mit einem Ansatz 338, 340 versehen. In den Ansätzen 338, 340 sitzen Schrauben 342, 344, die im veranschaulichten Beispiel als Differentialschrauben ausgeführt sind. Der Teilungsschnitt ist wie gezeigt so geführt, daß er bei eingebauter Stellbüchse 330 parallel zur Drehachse des Messerkopfes verläuft.

Mittels der Stellbüchse 330 kann der Schneideinsatz 292 in radialer Richtung feinverstellt werden. Dies geschieht folgendermaßen: Soll beispielsweise der Durchmesser vergrößert werden, wird die Schraube 340 nach unten verstellt, wodurch der in Fig. 29 linke, dem Schneideinsatz direkt benachbarte Stellbüchsenteil 336 nach unten in Richtung des für diesen Teil breiteren Abschnittes der Lagerbohrung 350 gezogen wird. Damit wird das Spiel zwischen den Lagerbüchsenteilen 334, 336 vergrößert und der andere Stellbüchsenteil 334 kann mittels der anderen Schraube 342 nach unten verstellt werden. Dadurch wird der Schneideinsatz 292 nach außen gedrückt und festgespannt. Eine axial parallel zum Teilungsschnitt 332 ausgerichtete Stellschraube 346 dient zur axialen Verstellung des Schneideinsatzes 292.

## Patentansprüche

1. Messerkopf mit einem Grundkörper (10) und mindestens einem Schneideinsatz (150), der im Grundkörper (10) mittels eines Klemmelements klemmbefestigt und in seiner Lage verstellbar ist, wobei sich der Schneideinsatz in einer Ausnehmung des Grundkörpers erstreckt und zur Verstellung des Schneideinsatzes in Eingriff befindliche Verstellmittel (152, 160; 164, 166, 168; 170; 180; 190, 194) vorgesehen sind und wobei der Schneideinsatz (150) für eine Verstellung eine Drehpunktlagerung aufweist, wobei beidseits des Drehpunkts im Schneideinsatz zwei Einstellschrauben (166, 168) zur Festlegung der Verschwenkung des Schneideinsatzes vorgesehen sind, **dadurch gekennzeichnet, daß** der Schneideinsatz (150) auf einem Einstellteil (152) gelagert ist, wobei der Schneideinsatz oder das Einstellteil zur Bildung eines Drehpunktes eine vorstehende Wölbung (164) aufweist, und der Schneideinsatz die zwei Einstellschrauben (166, 168) in Eingriff mit dem Einstellteil trägt.

2. Messerkopf nach Anspruch 1, **dadurch gekennzeichnet, daß** der Schneideinsatz (150) einen drehbaren, die Schneide tragenden Schneidplattenträger umfaßt.

3. Messerkopf nach Anspruch 1 oder 2, **dadurch gekennzeichnet, daß** als Verstellmittel für den Schneideinsatz ein Formglied (190) vorgesehen ist, das mit einer komplementären Ausnehmung (196) des Schneideinsatzes (150) in Formzwangseingriff steht derart, daß eine Bewegung des Verstellglieds eine Bewegung des Schneideinsatzes in derselben Richtung herbeiführt.

4. Messerkopf nach einem der Ansprüche 1 bis 3, **dadurch gekennzeichnet, daß** als Verstellmittel für den Schneideinsatz ein mit Formschluß gelagerter Verstellkeil (152, 160; 180) vorgesehen ist.

5. Messerkopf nach einem der Ansprüche 1 bis 4, **dadurch gekennzeichnet, daß** als Verstellmittel für den Schneideinsatz eine Verstellschraube (170) vorgesehen ist.

6. Messerkopf nach Anspruch 5, **dadurch gekennzeichnet, daß** die Verstellschraube eine Differentialschraube ist, die mit dem Schneideinsatz in Gewindeeingriff steht.

7. Messerkopf nach einem der Ansprüche 1 bis 6, **dadurch gekennzeichnet, daß** für die Klemmbefestigung des Schneideinsatzes ein Spannkeil oder -winkelstück oder eine Pratze vorgesehen ist.

8. Messerkopf nach einem der Ansprüche 1 bis 7, **dadurch gekennzeichnet, daß** für die Klemmbefestigung des Schneideinsatzes eine Schraube vorgesehen ist.

9. Messerkopf nach einem der Ansprüche 1 bis 8, **dadurch gekennzeichnet, daß** der Schneideinsatz eine sich in Längsrichtung des Schneideinsatzes erstreckende Kassette in Blockform mit Gewinde/komplementärer Ausnehmung für einen Eingriff mit dem Verstellmittel ist.

10. Messerkopf nach Anspruch 9, **dadurch gekennzeichnet, daß** in der Kassette eine Nut als komplementäre Ausnehmung für das Verstellmittel vorgesehen ist.

11. Messerkopf nach einem der Ansprüche 1 bis 10, **dadurch gekennzeichnet, daß** der Schneideinsatz (150) eine auf einen Träger aufgelötete Schneide (156') aufweist.

12. Messerkopf nach einem der Ansprüche 1 bis 10, **dadurch gekennzeichnet, daß** der Schneideinsatz eine formschlüssig gelagerte Schneide aufweist.

13. Messerkopf nach einem der Ansprüche 1 bis 10, **dadurch gekennzeichnet, daß** der Schneideinsatz eine mit einem Träger (154, 202) verschraubte Wendeplatte (156, 156") aufweist.

14. Messerkopf nach Anspruch 13, **dadurch gekennzeichnet, daß** der Träger (202) der Wendeplatte (156") drehbar ist.

15. Messerkopf nach einem der Ansprüche 1 bis 14, **dadurch gekennzeichnet, daß** die Schneide und/oder Wendeplatte aus Hartmetall, Cermet, Keramik, CBN, polykristallinem, Natur- und synthetischem Diamant als Dünn- und Dickfilm besteht.

16. Messerkopf nach einem der Ansprüche 1 bis 15, **dadurch gekennzeichnet, daß** eine Kühlmittelzufuhr im Grundkörper und/oder zum Schneideinsatz vorgesehen ist.

17. Messerkopf mit einem Grundkörper (210) und Schneideinsätzen (250), die im Grundkörper (210) jeweils in Ausnehmungen (220) verstellbar sind, wobei ein in einer Ausnehmung (230) angeordnetes Klemmelement (270) zur Klemmbefestigung vorgesehen ist, wobei der Schneideinsatz (250) formschlüssig in einer Aufnahme (222, 224) sitzt und mittels des Klemmelements (270) in seiner Lage fixiert ist, **dadurch gekennzeichnet, daß** das Klemmelement ein Spannkeil (270) ist, der formschlüssig in seiner Aufnahme aufgenommen ist.

18. Messerkopf nach Anspruch 17, **dadurch gekennzeichnet, daß** der Schneideinsatz (250') in einer formschlüssig gelagerten Exzenterbüchse (280) sitzt.

19. Messerkopf nach Anspruch 17 oder 18, **dadurch gekennzeichnet, daß** der Schneideinsatz mittels Keil oder Schraube verstellbar ist.

20. Messerkopf nach Anspruch 17, **dadurch gekennzeichnet, daß** im Grundkörper (210) eine Aufnahmebohrung (350) in einem Winkel zur Drehachse vorgesehen ist, in der eine Verstellbüchse (330) für den Schneideinsatz (292) sitzt.

21. Messerkopf nach Anspruch 20, **dadurch gekennzeichnet, daß** der Schneideinsatz (292) in einer zweiteilig ausgeführten Kegelbüchse (350) gelagert ist.

22. Messerkopf nach einem der Ansprüche 17 bis 21, **dadurch gekennzeichnet, daß** eine Aufnahme (230) für das Klemmelement (270) vorgesehen ist, in der das Klemmelement verschiebbar angeordnet ist.

23. Messerkopf nach einem der Ansprüche 17 bis 22, **dadurch gekennzeichnet, daß** die Aufnahme (230) für das Klemmelement (270) die Aufnahme (220) des Schneideinsatzes (250) kreuzend angeordnet ist.

24. Messerkopf nach einem der Ansprüche 17 bis 23, **dadurch gekennzeichnet, daß** der Schneideinsatz (250) auf der mit dem Klemmelement (270) in Eingriff tretenden Seite mit einer Schräge (260) versehen ist.

25. Messerkopf nach Anspruch 24, dadurch **gekennzeichnet,** daß die Schräge (260) mit einem Winkel β von etwa 10° ausgeführt ist.

26. Messerkopf nach einem der Ansprüche 17 bis 25, **dadurch gekennzeichnet, daß** das Klemmelement (270) auf der mit dem Schneideinsatz in Eingriff tretenden Seite mit einer Schräge (274) versehen ist.

27. Messerkopf nach den Ansprüchen 24 und 26, **dadurch gekennzeichnet, daß** der Winkel α der Schräge (274) des Klemmelements (270) kleiner als der Winkel der Schräge des Schneideinsatzes ist.

28. Messerkopf nach Anspruch 27, **dadurch gekennzeichnet, daß** die Differenz der Schrägenwinkel (β, α) etwa 2° ist.

29. Messerkopf nach einem der Ansprüche 17 bis 28, **dadurch gekennzeichnet, daß** eine Differentialschraube zur Verstellung des Schneideinsatzes (250) vorgesehen ist.

30. Messerkopf nach einem der Ansprüche 17 bis 29, **dadurch gekennzeichnet, daß** der Schneideinsatz (250) eine auf einen Träger gelötete Schneide (256) aufweist.

31. Messerkopf nach einem der Ansprüche 17 bis 30, **dadurch gekennzeichnet, daß** der Schneideinsatz (250) eine mit einem Träger verschraubte Wendeplatte (256') aufweist.

32. Messerkopf nach einem der Ansprüche 17 bis 31, **dadurch gekennzeichnet, daß** die Schneide und/oder Wendeplatte aus Hartmetall, Cermet, Keramik, CBN, polykristallinem, Natur- und synthetischem Diamant als Dünn- und Dickfilm besteht.

33. Messerkopf nach einem der Ansprüche 17 bis 32, **dadurch gekennzeichnet, daß** der Schneideinsatz (250) L-förmig ist, wobei sich die Schneide (256) im vorderen Bereich des kurzen Schenkels (254) befindet.

34. Messerkopf nach Anspruch 33, **dadurch gekennzeichnet, daß** sich die Schräge (260) am langen Schenkel (252) befindet.

35. Messerkopf nach einem Ansprüche 17 bis 34, **dadurch gekennzeichnet, daß** der Schneideinsatz (254) einen drehbaren, die Schneide tragenden Schneidplattenträger (292) umfaßt.

36. Messerkopf nach einem der Ansprüche 17 bis 35, **dadurch gekennzeichnet, daß** der Schneideinsatz (250) eine bewegliche Schneidplatte (256"') trägt, gegen die sich ein in einem Winkel auftreffender Stiftkörper (320) mit seinem einen Ende in Anlage befindet, wobei der Stiftkörper (320) gegen die Schneidplatte (256"') Druck nach außen ausübt und mit seinem anderen Ende an der Schrägfläche (312) eines Verstellelements anliegt.

37. Messerkopf nach Anspruch 36, **dadurch gekennzeichnet, daß** der Stiftkörper ein Stift (320) oder eine Schraube ist.

38. Messerkopf nach Anspruch 35 oder 36, **dadurch gekennzeichnet, daß** das Verstellelement (310) eine Kegelschraube ist.

39. Messerkopf nach einem der Ansprüche 17 bis 38, **dadurch gekennzeichnet, daß** im Grundkörper (210) eine Kühlung vorgesehen ist.

## Claims

1. Cutter head with a body (10) and at least one cutting insert (150) clamped in the body (10) by means of a clamping element and adjustable in its position, wherein the insert extends in a recess in the body and means for adjusting the insert in engagement are provided (152, 160; 164, 166, 168; 170; 180; 190, 194), and wherein the insert (150) is pivoted for adjustment, wherein two adjustment screws (166, 168) for fixing the pivoting of the insert are provided on both sides of the pivot point, **characterised in that** the insert (150) is mounted on an adjuster (152), wherein the insert or the adjuster has a protruding bulge (164) to form a pivot point, and the insert carries the adjustment screws (166, 168) in engagement with the adjuster.

2. Cutter head according to Claim 1, **characterised in that** the insert (150) has a rotatable support carrying the tool bit.

3. Cutter head according to Claim 1 or 2, **characterised in that** a shaped element (190) is provided as the part for adjusting the insert, which is positively engaging a complementary recess (196) in the insert (150) so that a movement of the adjustment part causes the insert to move in the same direction.

4. Cutter head according to one of the Claims 1 to 3, **characterised in that** an adjustment wedge (152, 160; 180) sitting in positive engagement serves as the means of adjusting the insert.

5. Cutter head according to one of the Claims 1 to 4, **characterised in that** an adjustment screw (170) is provided as the means of adjustment.

6. Cutter head according to Claim 5, **characterised in that** the adjustment screw is a differential screw engaging the insert over a thread.

7. Cutter head according to one of the Claims 1 to 6, **characterised in that** a tightening wedge or an angle or a claw is used for clamping the insert.

8. Cutter head according to one of the Claims 1 to 7, **characterised in that** a screw is used for clamping the insert.

9. Cutter head according to one of the Claims 1 to 8, **characterised in that** the insert is a cartridge in the form of a block with a thread/complementary recess to provide engagement for an adjustment means, extending in the longitudinal direction of the insert.

10. Cutter head according to Claim 9, **characterised in that** the cartridge has a groove as a complementary recess for the adjustment means.

11. Cutter head according to one of the Claims 1 to 10, **characterised in that** the insert (150) has a tool bit (156') soldered to a support.

12. Cutter head according to one of the Claims 1 to 10, **characterised in that** the insert has a tool bit mounted in positive engagement.

13. Cutter head according to one of the Claims 1 to 10, **characterised in that** the insert has a reversible plate (156, 156") bolted to a support (154, 202).

14. Cutter head according to Claim 13, **characterised in that** the support (202) for the reversible plate (156") is rotatable.

15. Cutter head according to one of the Claims 1 to 14, **characterised in that** the tool bit and/or reversible plate are of hard metal, cermet, ceramics, CBN, polycrystalline, natural and synthetic diamond in the form of a thin and thick film.

16. Cutter head according to one of the Claims 1 to 15, **characterised in that** coolant feed is provided in the body and/or to the insert.

17. Cutter head with a body (210) and cutting inserts (250), each adjustable in recesses (220) in the body (210), a clamping element (270) arranged in a recess (230) being provided for clamping, whereby the insert (250) is positively seated in a location (222, 224) and fixed in its position by means of a clamping element (270), **characterised in that** the clamping element is a tightening wedge (270) held positively in its location.

18. Cutter head according to Claim 17, **characterised in that** the insert (250') sits in a positively located eccentric bush (280).

19. Cutter head according to Claim 17 or 18, **characterised in that** the insert is adjustable by means of a wedge or a screw.

20. Cutter head according to Claim 17, **characterised in that** a location bore (350) is provided in the body (210) at an angle to the axis of rotation, in which sits an adjustment bush (330) for the insert (292).

21. Cutter head according to Claim 20, **characterised in that** the insert (292) is mounted in a conical split bush (350).

22. Cutter head according to one of the Claims 17 to 21, **characterised in that** a location (230) for the clamping element (270) is provided in which the clamping element is slidable.

23. Cutter head according to one of the Claims 17 to 22, **characterised in that** the location (230) for the clamping element (270) intersects the location (220) for the insert (250).

24. Cutter head according to one of the Claims 17 to 23, **characterised in that** the insert (250) is provided with a bevel (260) on the side in contact with the clamping element (270).

25. Cutter head according to Claim 24, **characterised in that** the bevel (260) has an angle β of approx. 10°.

26. Cutter head according to one of the Claims 17 to 25, **characterised in that** the clamping element (270) has a bevel (274) on the side engaging the insert.

27. Cutter head according to Claims 24 and 26, **characterised in that** the angle α of the bevel (274) on the clamping element (270) is smaller than the angle of the bevel on the insert.

28. Cutter head according to Claim 27, **characterised in that** the difference between the bevel angles (β, α) is approx. 2°.

29. Cutter head according to one of the Claims 17 to 28, **characterised in that** a differential screw is provided for adjusting the insert (250).

30. Cutter head according to one of the Claims 17 to 29, **characterised in that** the insert (250) has a tool bit (256) soldered onto a support.

31. Cutter head according to one of the Claims 17 to 30, **characterised in that** the insert (250) has a reversible plate (256') screwed onto a support.

32. Cutter head according to one of the Claims 17 to 31, **characterised in that** the tool bit and/or the reversible plate are made of hard metal, cermet, ceramics, CBN, polycrystalline, natural and synthetic diamond in the form of a thin and thick film.

33. Cutter head according to one of the Claims 17 to 32, **characterised in that** the insert (250) is L-shaped, the blade (256) being in the front area of the short leg (254).

34. Cutter head according to Claim 33, **characterised in that** the bevel (260) is on the long leg (252).

35. Cutter head according to one of the Claims 17 to 34, **characterised in that** the insert (254) comprises a rotatable insert support (292) supporting the cutting edge.

36. Cutter head according to one of the Claims 17 to 35, **characterised in that** the insert (250) carries a movable cutting insert (256"') against which a pin body (320) rests with one end at an angle, the pin body (320) exerting pressure against the cutting plate (256"') to the outside and resting with its other end at a bevel face (312) of an adjusting element.

37. Cutter head according to Claim 36, **characterised in that** the pin body (320) is a pin or a screw.

38. Cutter head according to Claim 35 or 36, **characterised in that** the adjusting element (310) is a tapered screw.

39. Cutter head according to one of the Claims 17 to 38, **characterised in that** cooling is provided in the body (210).

## Revendications

1. Tête de fraisage comportant un corps de base (10) et au moins un insert de coupe (150) qui est fixé par blocage dans le corps de base (10) à l'aide d'un élément de serrage et dont la position peut être réglée, l'insert de coupe étant disposé dans un évidement du corps de base et des moyens de réglage (152, 160 ; 164, 166, 168 ; 170 ; 180 ; 190, 194) en prise étant prévus pour le réglage de l'insert de coupe, l'insert de coupe (150), pour un réglage, comportant un système de pivot, deux vis de réglage (166, 168) étant prévues dans l'insert de coupe, de part et d'autre du point de pivotement, pour déterminer le pivotement de l'insert de coupe, **caractérisée en ce que** l'insert de coupe (150) est monté sur un élément d'ajustage (152), l'insert de coupe ou l'élément d'ajustage comportant une partie bombée (164) en saillie pour former un point de pivotement et l'insert de coupe portant les deux vis de réglage (166, 168) en prise avec l'élément d'ajustage.

2. Tête de fraisage selon la revendication 1, **caractérisée en ce que** l'insert de coupe (150) comprend un porte-plaquette pivotant qui porte la lame de coupe.

3. Tête de fraisage selon la revendication 1 ou 2, **caractérisée en ce qu'**il est prévu comme moyen de réglage pour l'insert de coupe, une pièce de forme (190) qui est en prise par complémentarité de formes avec un évidement (196) complémentaire de l'insert de coupe (150), de telle sorte qu'un déplacement de l'organe de réglage provoque un déplacement de l'insert de coupe dans la même direction.

4. Tête de fraisage selon une des revendications 1 à 3, **caractérisée en ce qu'**il est prévu comme moyen de réglage pour l'insert de coupe un coin de réglage (152, 160 ; 180) qui est monté avec complémentarité de formes.

5. Tête de fraisage selon une des revendications 1 à 4, **caractérisée en ce qu'**il est prévu comme moyen de réglage pour l'insert de coupe une vis de réglage (170).

6. Tête de fraisage selon la revendication 5, **caractérisée en ce que** la vis de réglage est une vis différentielle qui est en prise par son filetage avec l'insert de coupe.

7. Tête de fraisage selon une des revendications 1 à 6, **caractérisée en ce qu'**il est prévu pour la fixation par blocage de l'insert de coupe, un coin ou une équerre de serrage ou une bride.

8. Tête de fraisage selon une des revendications 1 à 7, **caractérisée en ce qu'**il est prévu pour la fixation par blocage de l'insert de coupe une vis.

9. Tête de fraisage selon une des revendications 1 à 8, **caractérisée en ce que** l'insert de coupe est une cassette en forme de bloc qui s'étend dans la direction longitudinale de l'insert de coupe, avec un filetage/évidement complémentaire pour un engagement avec le moyen de réglage.

10. Tête de fraisage selon la revendication 9, **caractérisée en ce qu'**il est prévu dans la cassette une rainure comme évidement complémentaire pour le moyen de réglage.

11. Tête de fraisage selon une des revendications 1 à 10, **caractérisée en ce que** l'insert de coupe (150) présente une lame de coupe (156') brasée sur un support.

12. Tête de fraisage selon une des revendications 1 à 10, **caractérisée en ce que** l'insert de coupe (150) présente une lame de coupe montée par complémentarité de formes.

13. Tête de fraisage selon une des revendications 1 à 10, **caractérisée en ce que** l'insert de coupe (150) présente une plaquette de coupe amovible (156, 156") vissée à un support (154, 202).

14. Tête de fraisage selon la revendication 13, **caractérisée en ce que** le support (202) de la plaquette de coupe amovible (156'') peut tourner.

15. Tête de fraisage selon une des revendications 1 à 14, **caractérisée en ce que** la lame de coupe et/ou la plaquette de coupe amovible (156, 156'') est en métal dur, en cermet, en céramique, en CBN, en diamant poly-cristallin, naturel ou synthétique sous forme de film mince ou épais.

16. Tête de fraisage selon une des revendications 1 à 15, **caractérisée en ce qu'**il est prévu, dans le corps de base et/ou dans l'insert de coupe, une alimentation en agent de refroidissement.

17. Tête de fraisage comportant un corps de base (210) et des inserts de coupe (250) qui, dans le corps de base (210), peuvent être réglés dans des évidements (220), un élément de serrage (270) disposé dans un évidement (230) étant prévu pour la fixation par blocage, l'insert de coupe (250) étant monté avec complémentarité de formes dans un logement (222, 224) et étant bloqué dans sa position à l'aide de l'élément de serrage (270), **caractérisée en ce que** l'élément de serrage est un coin de serrage (270) qui est monté avec complémentarité de formes dans son logement.

18. Tête de fraisage selon la revendication 17, **caractérisée en ce que** l'insert de coupe (250') est placé dans une douille à excentrique (280) montée avec complémentarité de formes.

19. Tête de fraisage selon la revendication 17 ou 18, **caractérisée en ce que** l'insert de coupe est réglable à l'aide d'un coin ou d'une vis.

20. Tête de fraisage selon la revendication 17, **caractérisée en ce qu'**il est prévu dans le corps de base (210), un logement en forme de trou (250) qui forme un angle avec l'axe de rotation et dans lequel est montée une douille de réglage (330) pour l'insert de coupe (292).

21. Tête de fraisage selon la revendication 20, **caractérisée en ce que** l'insert de coupe (292) est monté dans une douille conique (350) en deux parties.

22. Tête de fraisage selon une des revendications 17 à 21, **caractérisée en ce qu'**il est prévu un logement (230) pour l'élément de serrage (270), dans lequel ledit élément de serrage est monté coulissant.

23. Tête de fraisage selon une des revendications 17 à 22, **caractérisée en ce que** le logement (230) pour l'élément de serrage (270) est sécant avec le logement (220) pour l'insert de coupe (250).

24. Tête de fraisage selon une des revendications 17 à 23, **caractérisée en ce que** l'insert de coupe (250), sur sa face en prise avec l'élément de serrage (270), est pourvu d'une surface inclinée (260).

25. Tête de fraisage selon la revendication 24, **caractérisée en ce que** la surface inclinée (260) présente un angle β d'environ 10°.

26. Tête de fraisage selon une des revendications 17 à 25, **caractérisée en ce que** l'élément de serrage (270), sur sa face en prise avec l'insert de coupe, est pourvu d'une surface inclinée (274).

27. Tête de fraisage selon les revendications 24 et 26, **caractérisée en ce que** l'angle α de la surface inclinée (274) de l'élément de serrage (270) est inférieur à l'angle de la surface inclinée de l'insert de coupe.

28. Tête de fraisage selon la revendication 27, **caractérisée en ce que** la différence entre les angles (α, β) des surfaces inclinées est d'environ 2°.

29. Tête de fraisage selon une des revendications 17 à 28, **caractérisée en ce qu'**il est prévu une vis différentielle pour le réglage de l'insert de coupe (250).

30. Tête de fraisage selon une des revendications 17 à 29, **caractérisée en ce que** l'insert de coupe (250) comporte une lame de coupe (256) brasée sur un support.

31. Tête de fraisage selon une des revendications 17 à 30, **caractérisée en ce que** l'insert de coupe (250) comporte une plaquette de coupe amovible (256') vissée sur un support.

32. Tête de fraisage selon une des revendications 17 à 31, **caractérisée en ce que** la lame de coupe/plaquette de coupe amovible est en métal dur, en cermet, en céramique, en CBN, en diamant poly-cristallin, naturel ou synthétique sous forme de film mince ou épais.

33. Tête de fraisage selon une des revendications 17 à 32, **caractérisée en ce que** l'insert de coupe (250) a une forme de L, la lame de coupe (256) étant située dans la région antérieure de l'aile courte (254).

34. Tête de fraisage selon la revendication 33, **caractérisée en ce que** la surface inclinée (260) est située sur l'aile longue (252).

35. Tête de fraisage selon une des revendications 17 à 34, **caractérisée en ce que** l'insert de coupe (254) comporte un support de plaquette de coupe (292) tournant, qui porte la lame de coupe.

36. Tête de fraisage selon une des revendications 17 à 35, **caractérisée en ce que** l'insert de coupe (250) porte une plaquette de coupe (256''') mobile contre laquelle un élément en forme de tige (320) est en appui avec un certain angle avec l'une de ses extrémités, l'élément en forme de tige (320) exerçant une pression dirigée vers l'extérieur sur la plaquette de coupe (256''') et étant en appui avec son autre extrémité sur la surface inclinée (312) d'un élément de réglage.

37. Tête de fraisage selon la revendication 36, **caractérisée en ce que** l'élément en forme de tige est une goupille (320) ou une vis.

38. Tête de fraisage selon la revendication 35 ou 36, **caractérisée en ce que** l'élément de réglage (310) est une vis à bout conique.

39. Tête de fraisage selon une des revendications 17 à 38, **caractérisée en ce qu'**un refroidissement est prévu dans le corps de base.
